# EUROPEAN PATENT SPECIFICATION

(11) **EP 3 931 848 B1**
(45) Date of publication and mention of the grant of the patent: **04.12.2024**
(21) Application number: 20746741.6
(22) Date of filing: 20.02.2020
(51) Int. Cl.: G21C 13/04, G21C 13/067, G21C 7/12, F16D 3/06, G21C 13/036

(54) **ANTI-ROTATION ARRANGEMENTS FOR THERMAL SLEEVES**
VERDREHSICHERUNGSANORDNUNGEN FÜR THERMISCHE HÜLSEN
AGENCEMENTS ANTI-ROTATION POUR MANCHONS THERMIQUES

(30) Priority: 25.02.2019 US 201962810180 P; 12.04.2019 US 201962833006 P; 29.05.2019 US 201962853976 P; 21.06.2019 US 201962864857 P
(43) Date of publication of application: 05.01.2022
(73) Proprietor: Westinghouse Electric Company LLC, Cranberry Township, PA 16066 (US)
(72) Inventor: MASTOPIETRO, Anthony J., Wauwatosa, Wisconsin 53213 (US); BENACQUISTA, Eric M., Pittsbburgh, Pennsylvania 15229 (US)
(74) Representative: Fleuchaus & Gallo Partnerschaft mbB
(86) International application number: PCT/US2020/019116
(87) International publication number: WO 2020/205079

(56) References cited:
- WO-A1-2019/193088
- FR-A1- 2 689 297
- US-A- 3 415 080
- US-A- 4 518 559
- US-A- 4 655 483
- US-A- 5 001 840
- US-A- 5 053 189
- US-A1- 2018 202 497
- US-B1- 6 275 556

## Description

### BACKGROUND

The disclosed concept pertains generally to thermal sleeves and, more particularly, to arrangements for resisting, reducing, and/or preventing rotation of thermal sleeves used in nuclear reactors. The disclosed concept also pertains to methods of installing such arrangements.

In response to operational experience at a number of nuclear plants there is a clear need for increasing lifespan of thermal sleeves used in nuclear reactors. Thermal sleeve flange wear is a phenomenon first identified domestically in 2014 when a part-length sleeve failed. Since then inspections have been recommended and acceptance criteria have been developed. More recently (December 2017), two additional thermal sleeve failures at rodded locations were identified.

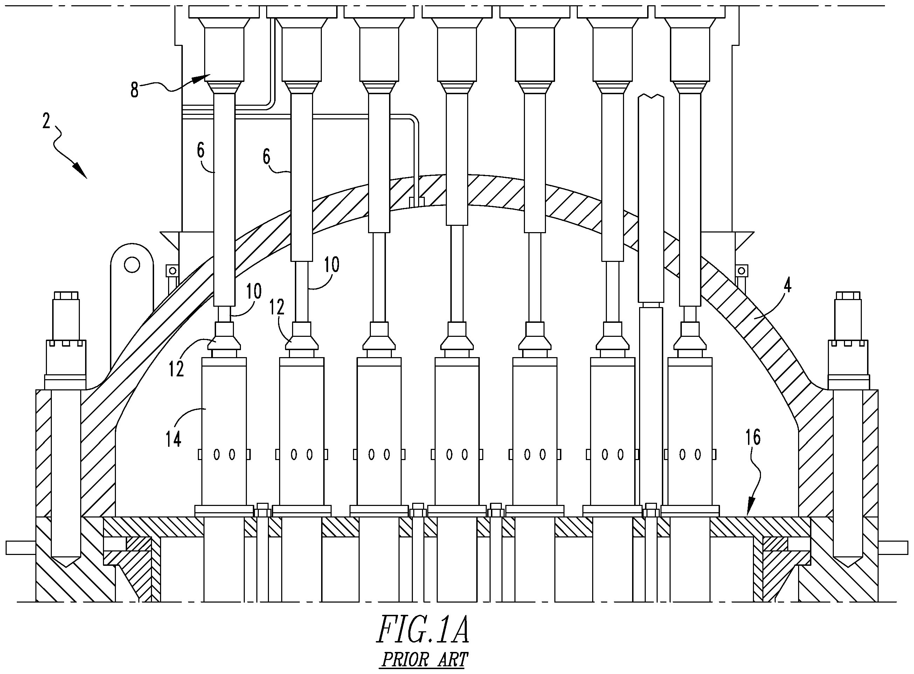

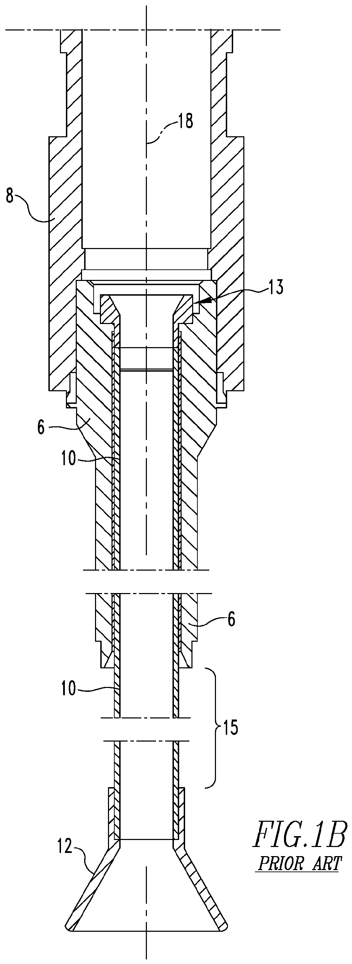

FIG. 1A is a schematic cross-sectional view of an upper portion of a conventional nuclear reactor 2 illustrating a portion of a reactor vessel 4 penetrated by a plurality of head penetration adapters 6 which extend downward from a control rod drive mechanism (CRDM) housing 8. Continuing to refer to FIG. 1A, as well as to the sectional view of FIG. 1B, a thermal sleeve 10 including a guide funnel 12 is positioned within each head penetration adapter 6 beneath each CRDM housing 8 such that each guide funnel 12 is positioned directly above, and spaced a distance from, a corresponding guide tube 14 extending from an upper support plate 16 within reactor vessel 4. The thermal sleeve 10 is housed within the head penetration adapter 6 within the reactor vessel 4 except within region 15 (FIG. 1B) where the thermal sleeve 10 is exposed to the reactor coolant.

The current belief is that wear of thermal sleeve 10 and head penetration adapter 6 in region 13 illustrated in FIGS. 1A and 1B results from rotation of the thermal sleeve 10 within the head penetration adapter 6 about a central axis 18 of the thermal sleeve 10. It is believed that vortices in the reactor coolant flowing within the reactor vessel 4 come into contact with the thermal sleeve 10 (i.e., in region 15) causing the thermal sleeve 10 to rotate about its central axis 18 relative to the head penetration adapter 6.

FR 2 689 297 A1 discloses tube lining sleeves that penetrate a nuclear reactor vessel top cover, cut in two with at least their lower part removed to enable repair of welds between sleeves and cover. US Patent No. 4,655,483 discloses a connector to provide a pressure boundary between a flanged nozzle and a concentric column, including a closure for compressing a seal ring against the nozzle flange that includes a hub defining an annular space between the closure and the column and graphite gaskets inserted into the annular space.

### SUMMARY

Embodiments of the disclosed concept increase the lifespan of thermal sleeves employed in nuclear reactors by reducing the wear of such sleeves and related components resulting from rotation of thermal sleeves within a head penetration adapter. In general, embodiments of the present invention utilize structures which can be readily attached, either during installation of a thermal sleeve or retrofit to an installed thermal sleeve, that resist, reduce, and/or prevent the thermal sleeve from rotating, but still allow for axial movement of the sleeve, such as due to thermal expansion/contraction and/or to allow the passage of reactor coolant when necessary. In other words, the structures attachable to the thermal sleeve and/or the head penetration adapter are configured to resist rotation of the thermal sleeve which may result due to vortices of coolant flow within the reactor which come into contact with the thermal sleeve.

As one aspect of the disclosed concept, a device for resisting (e.g. reducing and/or preventing) rotation of a thermal sleeve about a central axis thereof relative to a head penetration adapter in a nuclear reactor is provided. The device comprises a first structure and a second structure. The first structure and the second structure are configured to be operably engaged to resist rotation of the thermal sleeve about the central axis relative to the head penetration adapter while allowing axial movement of the thermal sleeve relative to the head penetration adapter.

The first structure comprises a first ring configured to be coupled to the thermal sleeve, the first ring having a plurality of rod members extending therefrom, each rod member extending along a respective rod axis that is parallel to the central axis when the first structure is coupled to the one of the thermal sleeve.

The second structure comprises a second ring configured to be coupled to the thermal sleeve, the second ring having a plurality of thru-holes formed therein, each thru-hole defines a thru-hole axis that is parallel to the central axis when the second ring is coupled to the head penetration adapter, and wherein each rod member of the first ring is configured to slidingly engage a corresponding thru-hole of the second ring.

The first ring may be formed of a stainless steel material, and the second ring may be formed from an alloy.

The second ring may comprise a female threaded portion which is configured to engage a cooperatively male threaded portion of the head penetration adapter.

The second ring may comprise an inner stepped portion configured to receive a lower end of the head penetration adapter.

The second ring may comprise a first segment and a second segment selectively couplable to the first segment.

The plurality of rod members may comprise two rod members.

The first ring may be split into a first segment and a second segment.

The first segment and the second segment may each include interlocking portions, wherein the first segment and the second segment are couplable together via the interlocking portions.

The first ring may comprise a first piece and a second piece separate from the first piece, the first piece may include one rod member of the plurality of rod members, and the second piece may include another rod member of the plurality of rod members.

Each rod member may have a non-circular cross-section and each thru-hole may have a correspondingly-shaped non-circular cross-section.

One of the first structure or the second structure may comprise a mechanical clamp configured to mechanically couple the one of the first structure or the second structure to the thermal sleeve or the head penetration adapter.

One of the first structure or the second structure may comprise a split clamp configured to be coupled to the thermal sleeve, the split clamp formed from two segments which are configured to be selectively coupled together via threaded fasteners.

One of the two segments may include pockets formed therein for engagement by crimped portions of one of the threaded fasteners.

The one of the first structure or the second structure may further comprise rods, the other one of the first structure or the second structure may comprise axial slots formed in the head penetration adapter, and each rod may be configured to engage a respective axial slot.

The first structure may comprise a main body portion configured to be coupled to a head penetration adapter, the main body portion may include a plurality of horizontally oriented apertures formed therein with each aperture housing a sliding member therein, the second structure may comprise a plurality of slots defined in the thermal sleeve, and each sliding member may be configured to engage a corresponding slot.

As another aspect of the disclosed concept, there is provided a nuclear reactor vessel comprising a head penetration adapter, a thermal sleeve, and a device for resisting rotation of the thermal sleeve about a central axis thereof relative to the head penetration adapter according to the above aspect.

The device comprises a first structure provided on the thermal sleeve, and a second structure provided on the head penetration adapter. The first structure and the second structure are configured to be operably engaged to resist rotation of the thermal sleeve about the central axis relative to the head penetration adapter while allowing axial movement of the thermal sleeve relative to the head penetration adapter.

### BRIEF DESCRIPTION OF THE DRAWINGS

Various features of the embodiments described herein, together with advantages thereof, may be understood in accordance with the following description taken in conjunction with the accompanying drawings as follows:
FIG. 1A is a schematic cross-sectional view of an upper portion of a conventional nuclear reactor;
FIG. 1B is a schematic cross-sectional view of a conventional reactor vessel head penetration illustrating a CRDM housing, a head penetration adapter, and a thermal sleeve;
FIG. 2 is a perspective view of a device for resisting, reducing, and/or preventing rotation of a thermal sleeve about a central axis thereof relative to a head penetration adapter in a nuclear reactor in accordance with at least one aspect of the present disclosure
FIG. 3 is an exploded view of the device of FIG. 2;
FIG. 4 is a perspective view of a portion of the device of FIG. 2 coupled to a lower portion of a head penetration adapter;
FIG. 5 is a perspective view of a portion of the device of FIG. 2 coupled to a lower portion of the head penetration adapter via welds;
FIG. 6 is a side perspective view of a first portion of the device of FIG. 2 positioned on a lower portion of the head penetration adapter, where a second portion of the device of FIG. 2 loosely positioned on a lower portion of the thermal sleeve;
FIG. 7 is a side perspective view illustrating the second portion of the device of FIG. 2 secured to the thermal sleeve and in engagement with the first portion of the device of FIG. 2 on the lower portion of the head penetration adapter;
FIG. 8 is a perspective view illustrating an alternative ring which may be employed in the arrangement of FIGS. 2 and 3 in accordance with at least one aspect of the present disclosure;
FIG. 9 is perspective view of the ring of FIG. 8 secured to an end portion of a head penetration adapter via welds;
FIG. 10 is a top perspective view illustrating a multi-piece ring, in an unassembled state, which may be employed in the arrangement of FIGS. 2 and 3 in accordance with at least one aspect of the present disclosure;
FIG. 11 is a top perspective view of the multi-piece ring of FIG. 10 in an assembled state;
FIG. 12 is a perspective view of the multi-piece ring of FIGS. 10 and 11 positioned on a lower end of a head penetration adapter;
FIG. 13 is a perspective view of the multi-piece ring of FIGS. 10 and 11 secured to the lower end of the head penetration adapter via welds;
FIG. 14 is a bottom perspective view illustrating a multi-piece first ring coupled to a thermal sleeve via welds and engaged with the multi-piece ring of FIGS. 10 and 11 coupled to a lower end of a head penetration adapter, in accordance with at least one aspect of the present disclosure;
FIG. 15 is a side perspective view of the arrangement of FIG. 14 further illustrating a location where the thermal sleeve was cut and welded in order to allow for installation of the structures of the arrangement on the head penetration adapter and the thermal sleeve;
FIG. 16 is a perspective view of another device for resisting, reducing, and/or preventing rotation of a thermal sleeve about a central axis thereof relative to a head penetration adapter in a nuclear reactor in accordance with at least one aspect of the present disclosure;
FIG. 17 is a perspective view of the device of FIG. 16, shown with first and second structures thereof coupled, respectively, to the lower portions of a head penetration adapter and thermal sleeve;
FIG. 18 is a perspective view of yet another device for resisting, reducing, and/or preventing rotation of a thermal sleeve about a central axis thereof relative to a head penetration adapter in a nuclear reactor in accordance with at least one aspect of the present disclosure;
FIG. 19 is a perspective view of the device of FIG. 18, shown with first and second structures thereof coupled, respectively, to the lower portions of a head penetration adapter and thermal sleeve;
FIG. 20 is a perspective cross-sectional view of the device of FIG. 18 taken along line 20-20 in FIG. 18;
FIG. 21 is a side cross-sectional view of the device of FIG. 18 taken along line 21-21 in FIG. 18;
FIG. 22 is a perspective view of a device in the form of a split clamp for use in an arrangement for resisting, reducing, and/or preventing rotation of a thermal sleeve about a central axis thereof relative to a head penetration adapter in a nuclear reactor in accordance with at least one aspect of the present disclosure;
FIG. 23 is a perspective view of a fastener for use with the device of FIG. 22;
FIG. 24 is an enlarged view of a portion of the device of FIG. 22 illustrating pockets formed therein for engagement by crimped portions of the fastener of FIG. 23;
FIG. 25 is a perspective view of the device of FIG. 23 coupled to a thermal sleeve adjacent a lower end of a head penetration adapter in engagement with axial slots formed in the head penetration adapter;
FIG. 26 is a perspective view of a device for resisting, reducing, and/or preventing rotation of a thermal sleeve about a central axis thereof relative to a head penetration adapter in a nuclear reactor in accordance with at least one aspect of the present disclosure;
FIG. 27 is a perspective view of the device of FIG. 26, shown with first and second structures thereof coupled, respectively, to the lower portions of a head penetration adapter and thermal sleeve;
FIG. 28 is a perspective view of another device configured to resist, reduce, and/or prevent rotation of a thermal sleeve about a central axis thereof relative to a head penetration adapter in a nuclear reactor in accordance with at least one aspect of the present disclosure;
FIG. 29 is a perspective view of the device of FIG. 28 secured to a bottom portion of a head penetration adapter via welds;
FIG. 30 is a perspective view of a portion of a thermal sleeve including axial cutouts for use with the device of FIG. 28;
FIG. 31 is a cross-sectional view of FIG. 29 taken along line 31-31 of FIG. 29;
FIG. 32 is a perspective view of an arrangement of guide tubes of a nuclear reactor illustrating a modification to one of the guide tubes, in accordance with at least one aspect of the present disclosure;
FIG. 33 is a perspective view of a wear mitigation device in accordance with at least one aspect of the present disclosure;
FIG. 34 is another perspective view of the wear mitigation device of FIG. 33;
FIG. 35 is a perspective view of a guide funnel configured to be installed on a lower portion of a thermal sleeve in accordance with in accordance with at least one aspect of the present disclosure;
FIG. 36A is a perspective view of an arrangement of guide tubes, similar to FIG. 32, illustrating the wear mitigation device of FIGS. 33 and 34 installed on one of the guide tubes and the guide funnel of FIG. 35 engaged with the wear mitigation device in a first positioning;
FIG. 36B is a perspective view of an arrangement of guide tubes, similar to FIG. 32, illustrating the wear mitigation device of FIGS. 33 and 34 installed on one of the guide tubes and the guide funnel of FIG. 35 engaged with the wear mitigation device in a second positioning different from the first positioning shown in FIG. 36A;
FIG. 37 is an enlarged view of FIG. 36A illustrating the interaction of a fastening mechanism for securing the wear mitigation device of FIG. 34 to a guide tube and further illustrating a crimp collar of the wear mitigation device for inhibiting unwanted rotation of the fastening mechanism in accordance with at least one aspect of the present disclosure;
FIG. 38 is an upper perspective view of a wear mitigation device in accordance with at least one aspect of the present disclosure;
FIG. 39 is a perspective view of an arrangement of guide tubes, similar to FIG. 32, shown with the wear mitigation device of FIG. 38 installed on one of the guide tubes and a guide funnel attached to a lower portion of a thermal sleeve engaged with the wear mitigation device;
FIG. 40 is a perspective view of a wear mitigation device in accordance with at least one aspect of the present disclosure;
FIG. 41 is a perspective view of an arrangement of guide tubes, similar to FIG. 32, shown with the wear mitigation device of FIG. 40 installed on one of the guide tubes and a guide funnel attached to a lower portion of a thermal sleeve engaged with the wear mitigation device;
FIG. 42 is a perspective view of a wear mitigation device in accordance with at least one aspect of the present disclosure; FIG. 43 is an enlarged perspective view of a portion of the wear mitigation device of FIG. 42;
FIG. 44 is a perspective view of an arrangement of guide tubes, similar to FIG. 32, shown with the wear mitigation device of FIG. 42 installed on one of the guide tubes and the guide funnel of FIG. 35 engaged with the wear mitigation device;
FIG. 45 is a top view of the arrangement of FIG. 44;
FIG. 46 is a perspective view of a wear mitigation device in accordance with at least one aspect of the present disclosure;
FIG. 47 is a perspective view of a wear mitigation device in accordance with at least one aspect of the present disclosure;
FIG. 48 is a perspective view of a wear mitigation device in accordance with at least one aspect of the present disclosure;
FIG. 49 is an enlarged perspective view of a portion of the wear mitigation device of FIG. 48;
FIG. 50 is a side elevation view of the wear mitigation device of FIG. 48;
FIG. 51 is a cross-sectional view of a portion of the wear mitigation device of FIG. 48;
FIG. 52A is a perspective view of a crimping cup for use with the wear mitigation device of FIG. 48;
FIG. 52B is a perspective view of arm members of the wear mitigation device of FIG. 48;
FIG. 52C is a perspective view of a clamping wedge of the wear mitigation device of FIG. 48;
FIG. 53 is a perspective view of an arrangement of guide tubes, similar to FIG. 32, shown with the wear mitigation device of FIG. 48 installed on one of the guide tubes and a guide funnel, such as shown in FIG. 35, engaged with the wear mitigation device;
FIG. 54 is a top view of the arrangement of FIG. 53;
FIG. 55A is a perspective view of an arrangement of guide tubes, similar to FIG. 32, shown with the wear mitigation device of FIG. 48 installed on one of the guide tubes and a guide funnel, such as shown in FIG. 35, engaged with the wear mitigation device in a first positioning;
FIG. 55B is a perspective view of an arrangement of guide tubes, similar to FIG. 32, shown with the wear mitigation device of FIG. 48 installed on one of the guide tubes and a guide funnel, such as shown in FIG. 35, engaged with the wear mitigation device in a second positioning different from the first positioning shown in FIG. 55A;
FIG. 56 is a side elevation view of the arrangement of FIG. 55B with the guide funnel shown with hidden lines to better illustrate the interaction between the guide funnel and the wear mitigation device;
FIG. 57 is a perspective view of wear mitigation device assembled to a guide funnel, such as the guide funnel shown in FIG. 39, in accordance with at least one aspect of the present disclosure;
FIG. 58 is another perspective view of the wear mitigation device and the guide funnel of FIG. 57;
FIG. 59 is a side elevation view of the wear mitigation device and the guide funnel of FIG. 57;
FIG. 60 is a top view of the wear mitigation device and the guide funnel of FIG. 57;
FIG. 61 is a bottom view of the wear mitigation device and the guide funnel of FIG. 57;
FIG. 62 is a perspective view of a wear mitigation device assembled to a guide funnel, such as the guide funnel shown in FIG. 39, in accordance with at least one aspect of the present disclosure;
FIG. 63 is a top view of the wear mitigation device and the guide funnel of FIG. 62;
FIG. 64 is a perspective view of a wear mitigation device in accordance with at least one aspect of the present disclosure;
FIG. 65 is a perspective view of another guide funnel installed on a lower portion of a thermal sleeve in accordance with at least one aspect of the present disclosure;;
FIGS. 66 and 67 are perspective views of an arrangement of guide tubes, similar to FIG. 32, shown with the wear mitigation device of FIG. 64 installed on one of the guide tubes and the guide funnel of FIG. 65 engaged with the wear mitigation device; and

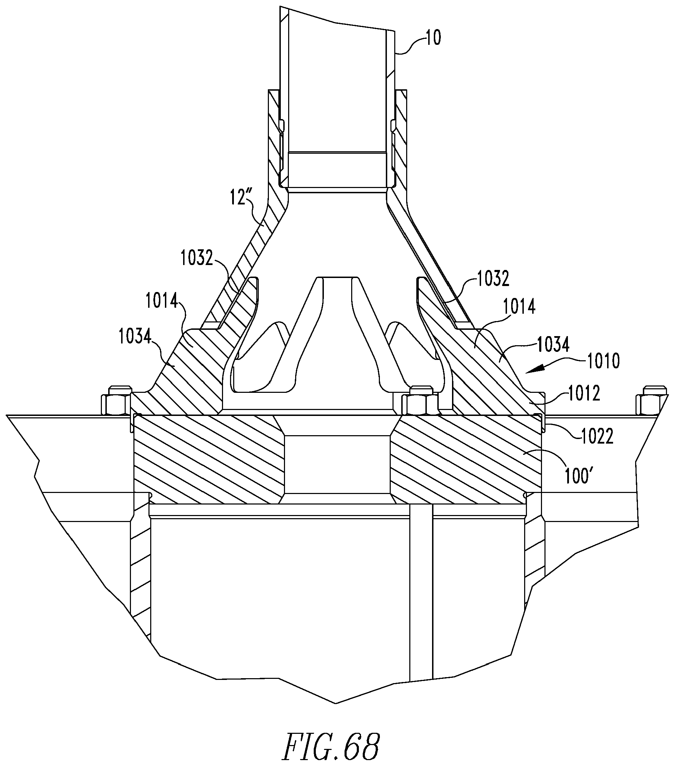

FIG. 68 is a sectional elevation view of the wear mitigation device and guide funnel of FIGS. 66 and 67.

Corresponding reference characters indicate corresponding parts throughout the several views. The exemplifications set out herein illustrate various embodiments of the invention, in one form, and such exemplifications are not to be construed as limiting the scope of the invention in any manner.

### DETAILED DESCRIPTION

It has been observed that thermal sleeves have been wearing between the upper head on the thermal sleeve and the head penetration adapter. This wear is observed by taking measurements using laser metrology to determine the amount that a particular thermal sleeve has "dropped" relative to the head penetration adapter. As part of an innovation program, methods for removing worn thermal sleeves and replacing them with a temporary "compressible thermal sleeve" was developed, which does not require removal of the CRDM motor assembly from the top side of the reactor head. Such methods and replacement thermal sleeves are described in pending U.S. Patent Application Serial No. 16/262,037, entitled THERMAL SLEEVE, filed January 30, 2019. However, the mechanism of failure (i.e., wearing of the thermal sleeve and head penetration adapter) was not addressed, and a compressible thermal sleeve will most likely continue to wear along with the head penetration adapter in a similar manner to the worn thermal sleeve which has been replaced.

A solution to reduce and/or preventing such wear is to install a device on to the head penetration adapter which will create an interface for a second device which is attached to the thermal sleeve. Once the two devices are in place and interfaced with one another, the degrees of freedom of the thermal sleeve are limited, removing rotation about the centerline axis of the thermal sleeve. Embodiments of the concept generally utilize a ring or similar structure which is attached to the head penetration adapter by various methods depending on the design of the head penetration adapter. The device may attach to the threads or interface with the outer diameter of the head penetration adapter. The device is fixed and retained by any suitable mechanical means, such as, without limitation, welding, clamping, pinning, screwing, etc., and/or combinations thereof. In at least one embodiment, the device is integral to the head penetration adapter. The device includes features such as holes, slots, splines or keyways which are engaged by a mating device attached to the thermal sleeve. The device which attaches to the thermal sleeve can be attached by any suitable mechanical means such as welding, clamping, pinning, screwing, etc.. In at least one embodiment, the device which attaches to the thermal sleeve is integral to the thermal sleeve design. The engagement of the splines or keys will prevent most of the relative rotational motion of the thermal sleeve and the head penetration adapter. This motion is the source of the wear which leads to thermal sleeve failure. By restricting this motion, the functional life of the thermal sleeves is greatly extended. In at least one embodiment, the device or devices resist, reduce, and/or prevent rotational motion of the thermal sleeve relative to the head penetration adapter while allowing some axial movement of the thermal sleeve relative to the head penetration adapter.

There are generally two applications for such solutions. The first application incorporates the device(s) into a replacement compressible thermal sleeve. The second application incorporates the device(s) on an existing thermal sleeve which has shown some wear within acceptable limits.

Alternative designs include, for example, attaching a device to the head penetration adapter which interfaces with features machined into the thermal sleeve which meet the design intention of resisting, reducing, and/or preventing rotation and/or translation (one or both).

Before explaining various aspects of the present disclosure in detail, it should be noted that the illustrative examples are not limited in application or use to the details of construction and arrangement of parts illustrated in the accompanying drawings and description. The illustrative examples may be implemented or incorporated in other aspects, variations, and modifications, and may be practiced or carried out in various ways. Further, unless otherwise indicated, the terms and expressions employed herein have been chosen for the purpose of describing the illustrative examples for the convenience of the reader and are not for the purpose of limitation thereof. Also, it will be appreciated that one or more of the following-described aspects, expressions of aspects, and/or examples, can be combined with any one or more of the other following-described aspects, expressions of aspects, and/or examples.

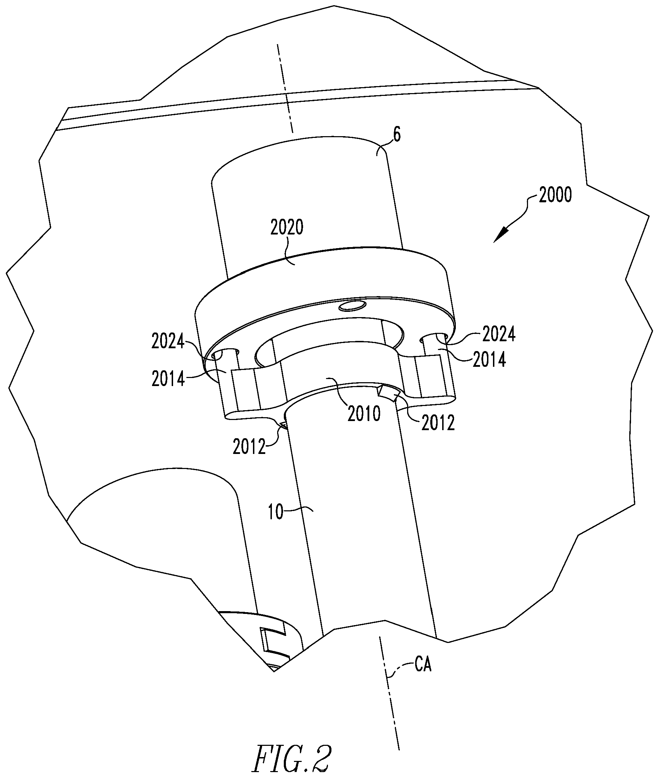

FIGS. 2-7 depict a device 2000 configured to resist, reduce, and/or prevent rotation of a thermal sleeve 10 about a central axis CA thereof relative to a head penetration adapter 6 in a nuclear reactor. FIG. 2 illustrates the device 2000 installed on portions of the head penetration adapter 6 and the thermal sleeve 10. The arrangement includes a first structure, or a first ring 2010, which is coupled (e.g., via welds 2012) to the thermal sleeve 10. Various welds are depicted in a number of embodiments of the present disclosure as filet welds. This, however, should not be construed as limiting. Other suitable welds for use with the embodiments of the present disclosure are contemplated. The first ring includes a plurality of rod members 2014 extending therefrom. More specifically, each rod member 2014 extends from the first ring 2010 along a rod axis RA which is parallel to the central axis CA when the first ring 2010 is coupled to the thermal sleeve 10. In the illustrated embodiment, the rod members 2014 are symmetrical with respect to the central axis CA, however, other embodiments are envisioned where the rod members 2014 are not symmetrical. In certain embodiments, one or more of the rod members 2014 extend along respective rod axes that are not parallel to the central axis CA. In at least one embodiment, the first ring 2010 is formed from a stainless steel material.

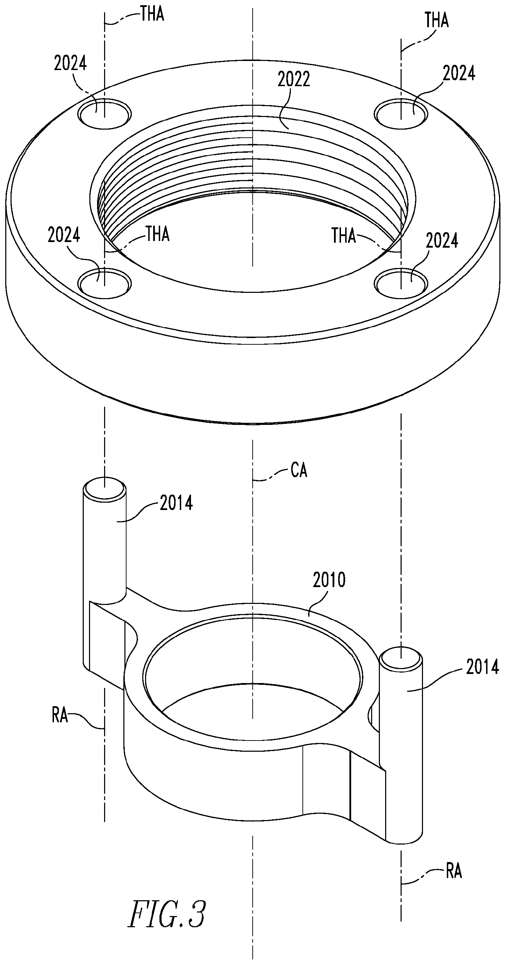

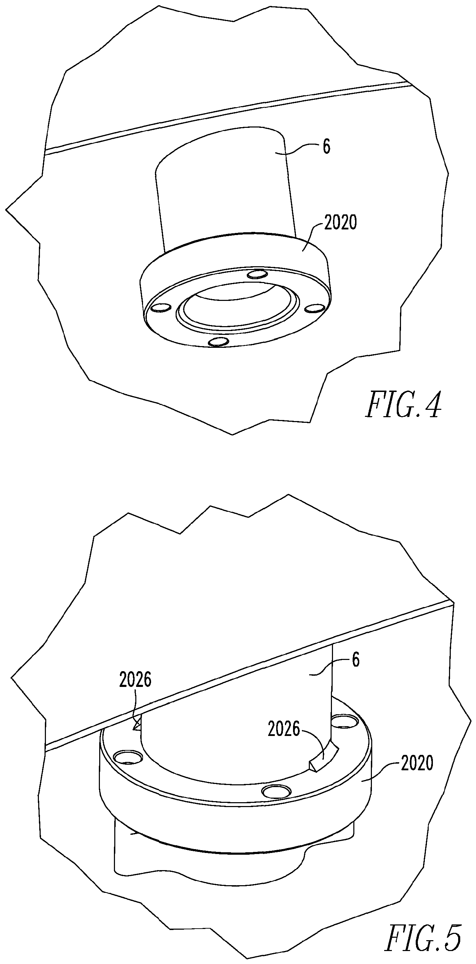

Referring primarily to FIGS. 2 and 3, the device 2000 further includes a second structure, or second ring 2020, coupled to the head penetration adapter 6. The second ring 2020 comprises an internal diameter including a threaded portion 2022 which engages a cooperative threaded portion on the outside diameter of the head penetration adapter 6. Head penetration adapters for certain types of reactors comprise threaded portions on the outside diameter of their bottom end. For head penetration adapters without such threaded portions, the head penetration adapter may be machined via any suitable means to create a threaded portion to receive the threaded portion 2022 of the second ring 2020, for example. The second ring 2020 includes a plurality of thru-holes 2024 formed therein, with each thru-hole 2024 defining a thru-hole axis THA. In the illustrated embodiment, the thru-holes 2024 are equally radially spaced approximately ninety degrees apart about the central axis CA, however, other embodiments are envisioned where the thru-holes 2024 are not equally radially spaced. In at least one embodiment, the second ring 2020 is formed from an alloy. Each rod member 2014 of the first ring 2010 is configured to engage a corresponding thru-hole 2024 of the second ring 2020 to resist, reduce, and/or prevent rotation of the thermal sleeve 10 about its central axis CA relative to the head penetration adapter 6, while allowing axial movement of the thermal sleeve 10 relative to the head penetration adapter 6. For example, axial movement of the thermal sleeve 10 relative to the head penetration adapter can be caused by thermal expansion/contraction of the thermal sleeve 10 and/or may be necessary to allow the passage of reactor coolant flow. FIGS. 4 and 5 illustrate further views of the second ring 2020 coupled to the lower portion of the head penetration adapter 6. As shown in FIG. 5, the second ring 2020 is further secured to the head penetration adapter by a plurality of welds 2026 in addition to the threaded connection previously discussed.

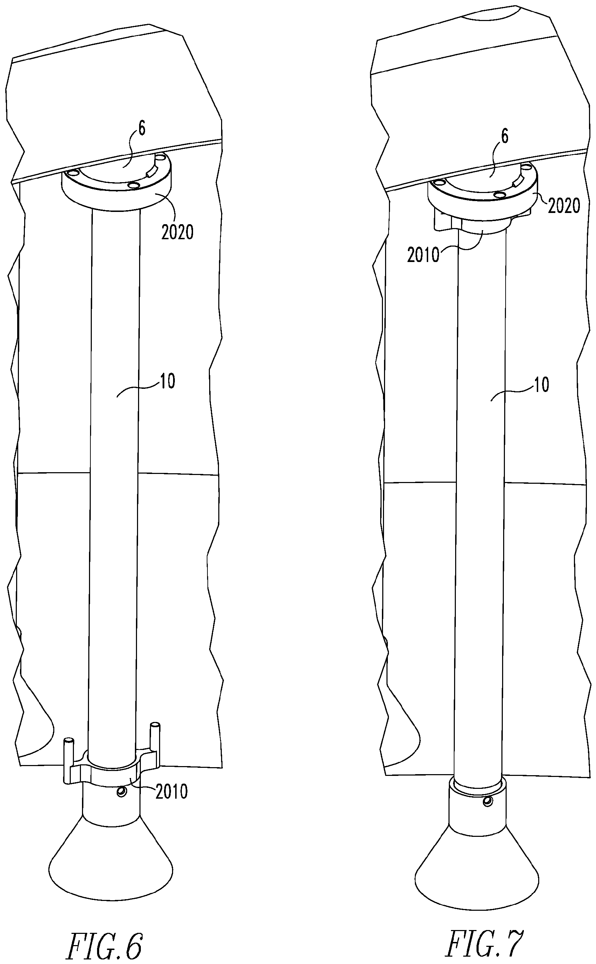

Referring primarily to FIG. 6, the first ring 2010 may initially be installed onto a newly installed replacement thermal sleeve 10. Clearance is provided between the inner diameter of the first ring 2010 and the outer diameter of the thermal sleeve 10 to allow the first ring 2010 to be slid along and/or rotated about the thermal sleeve 10 to a desired position. The second ring 2020 is coupled to the bottom portion of the head penetration adapter 6 as discussed above. The first ring 2010 is then slid into engagement with the second ring 2020 (FIG. 7) and then suitably coupled (e.g., via welding or any suitable attachment method) to the thermal sleeve 10 in the desired position.

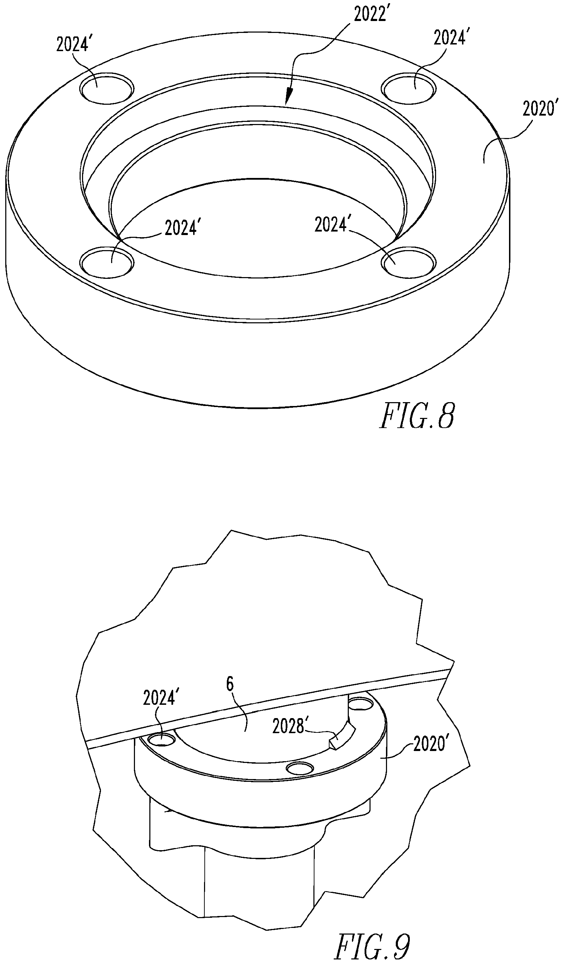

FIGS. 8 and 9 depict a second ring 2020' for use with the first ring 2010 in place of the second ring 2020. The second ring 2020' comprises an inner stepped portion 2022' for receiving the lower end of a head penetration adapter 6 and through holes 2024' for interfacing with the rod members 2014 of the first ring 2010. In the illustrated embodiment, the second ring 2020' is attached to the head penetration adapter 6 via welds 2028'. However, any suitable attachment method may be utilized to attach the second ring 2020' to the bottom portion of the head penetration adapter 6.

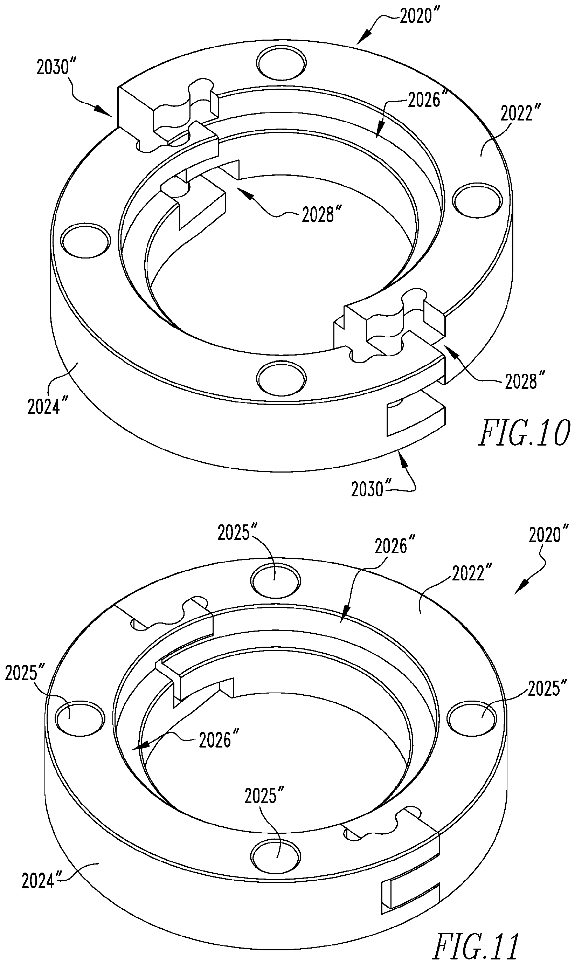

FIGS. 10 and 11 depict another a second ring 2020" for use with the first ring 2010 in place of the second ring 2020. The second ring 2020' comprises a first arcuate portion 2022" and a second arcuate portion 2024" configured to be mated together around a portion, such as the bottom end of the head penetration adapter 6 to form a circular ring. Each of the first portion 2022" and the second portion 2024" comprises a stepped portion 2026" for receiving the bottom end of the head penetration adapter 6 when the first portion 2022" and the second portion 2024" are mated together. Further, each of the first portion 2022" and the second portion 2024" comprise a plurality of through holes 2025" therein. The through holes 2025" are similar to the through holes 2024 previously described (FIG. 3). The first portion 2022" comprises a female interlock portion 2028" at both ends and the second portion 2024" comprises a male interlock portion 2030" at both ends. The female interlock portions 2028" are configured to receive the male interlock portions 2030" to form the second ring 2020". Once mated together around the bottom end of the penetration adapter 6, the second ring 2020" can be welded in the female and male interlock regions 2028", 2030" to prevent the second ring 2020" from coming apart in service. In other embodiments, the first portions 2022" and the second portions 2022" are each modified to include one female interlock portion on one end thereof and one male interlock portion on the other end.

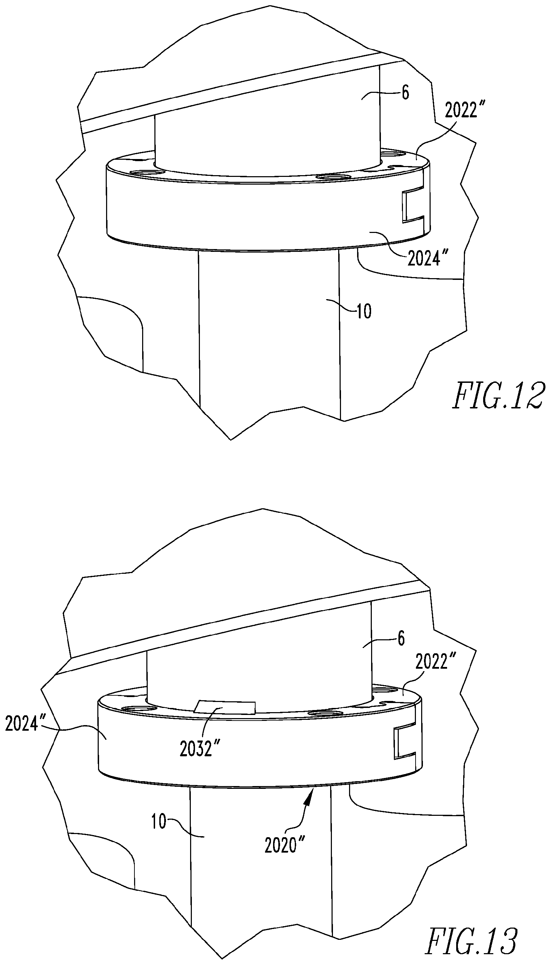

In at least one embodiment, the second ring 2020" can be retro-fit onto an already installed thermal sleeve 10. As illustrated in FIGS. 12 and 13, the first portion 2022" and the second portion 2024" are positioned around the head penetration adapter 6 and mated together to form the second ring 2020". Once the second ring 2020" is in the desired position, the second ring 2020" can be secured to the head penetration adapter 6 via welds 2032", as shown in FIG. 13. In at least one embodiment, the second ring 2020" can be used in conjunction with the first ring 2010 in the manner describe above with regard to FIGS. 2,3, 6, and 7, for example. However, other embodiments are contemplated for use with the second ring 2020", as discussed in greater detail below.

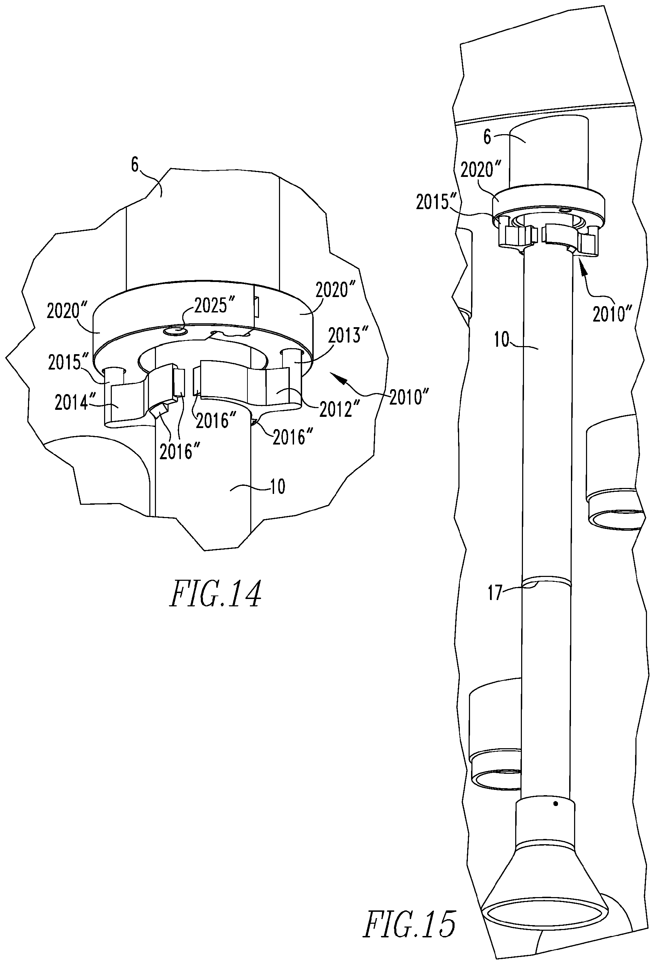

FIGS. 14 and 15 depict a first ring 2010" configured to be attached to the thermal sleeve 10 and mate with the second ring 2020" which is attached to the head penetration adapter 6, as discussed above. The first ring 2010" comprises a first portion 2012" and a second portion 2014". The first portion 2012" comprises a first upstanding rod member 2013" configured to be received within one of the through holes 2025" in the second ring 2020". The second portion 2014" comprises a second upstanding rod member 2015" configured to be received within another one of the through holes 2025" in the second ring 2020". Once the first portion 2012" and the second portion 2014" are in the desired position, welds 2016" are applied to secure the first portion 2012" and the second portion 2014" to the thermal sleeve 10. As can be seen in FIG. 14, each of the first portion 2012" and the second portion 2014" comprises less than half of a full circumference. The first portion 2012" and the second portion 2014" are sized in this manner to permit variability of the installation positions and/or weld locations.

Further to the above, FIG. 15 illustrates a cut location 17 on the thermal sleeve 10 where the thermal sleeve 10 may be cut in order to allow for the installation of the devices discussed herein onto the head penetration adapter 6 and/or the remaining portion of the thermal sleeve 10. Once the assembly is complete, the thermal sleeve 10 is welded back together.

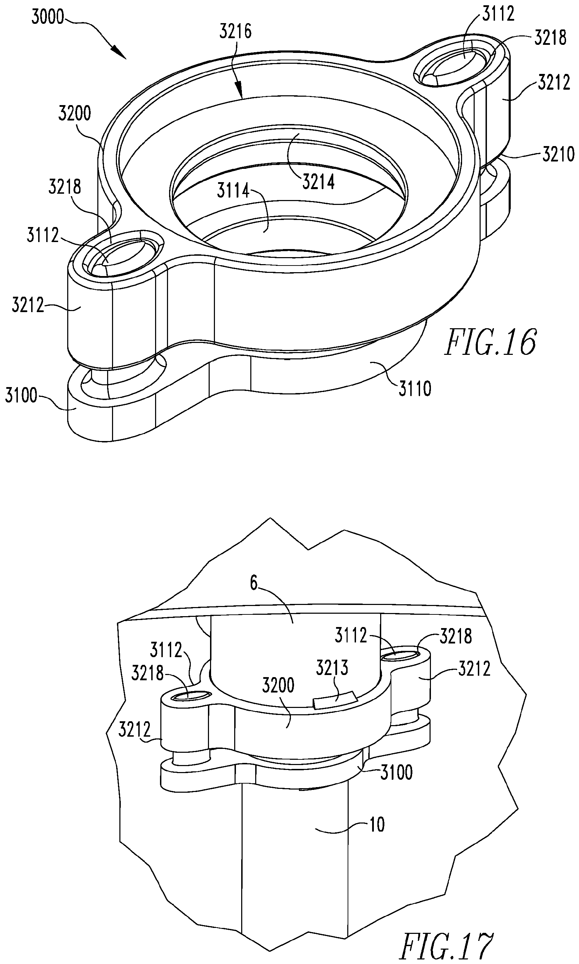

FIGS. 16 and 17 depict a device 3000 configured to resist, reduce, and/or prevent rotation of the thermal sleeve 10 about an axis thereof relative to the head penetration adapter 6. The device 3000 comprises a first ring 3100 configured to be attached to a thermal sleeve 10 and a second ring 3200 configured to be attached to the head penetration adapter 6. The first ring 3100 and the second ring 3200 are configured for operable engagement to resist, reduce, and/or prevent rotation of the thermal sleeve 10 relative to the head penetration adapter 6, as discussed in greater detail below.

The first ring 3100 comprises a body 3110 and two upstanding rod members 3112 extending from the ring body 3110. The ring body 3110 comprises an opening 3114 sized such that the first ring 3100 can slide onto the thermal sleeve 10. In the illustrated embodiment, the upstanding rod members 3112 comprise an ellipse cross-section that is non-circular. However, other embodiments are envisioned where the upstanding rod members 3112 comprise a cylindrical shape, such as the rod members 2014 illustrated in FIG. 2. In any event, the second ring 3200 comprises a ring body 3210 including two lug members 3212 extending laterally therefrom. An opening 3214 and a cutout region 3216 are defined in the ring body 3210. The opening 3214 is sized such that the second ring 3200 can be slid along the thermal sleeve 10 and abut against the bottom end of the head penetration adapter 6. More specifically, the cutout region 3216, provided in the body 3210 of the second ring 3200, receives the bottom end of the head penetration adapter 6. The lug members 3212 comprise openings 3218 therein which are sized and shaped to receive the upstanding rod members 3112 when the first ring 3100 and the second ring 3200 are assembled together as illustrated in FIG. 17.

In use, the second ring 3200 can already be attached to a replacement thermal sleeve 10 or can be retrofit to an existing thermal sleeve as described herein. The second ring 3200 is slid along the thermal sleeve 10 until the bottom end of the head penetration adapter 6 is received in the cutout region 3216 of the second ring 3200. An already installed thermal sleeve 10 may be cut, as discussed above, in order to receive the second ring 3200. The second ring 3200 is then welded to the head penetration adapter 6 via welds 3213. The first ring 3100 is then installed onto the thermal sleeve 10 and slid along the thermal sleeve 10 until the upstanding rod members 3112 are received within their respective openings 3218 in the second ring 3200. Once the first ring 3100 is in the desired position, the first ring 3100 is welded to the thermal sleeve 10. The first ring 3100 is engaged with the second ring 3200 to resist, reduce, and/or prevent the thermal sleeve 10 from rotating about an axis thereof. However, the thermal sleeve 10 is permitted to axially translate due to the relationship between the upstanding rod members 3112 and the openings 3218.

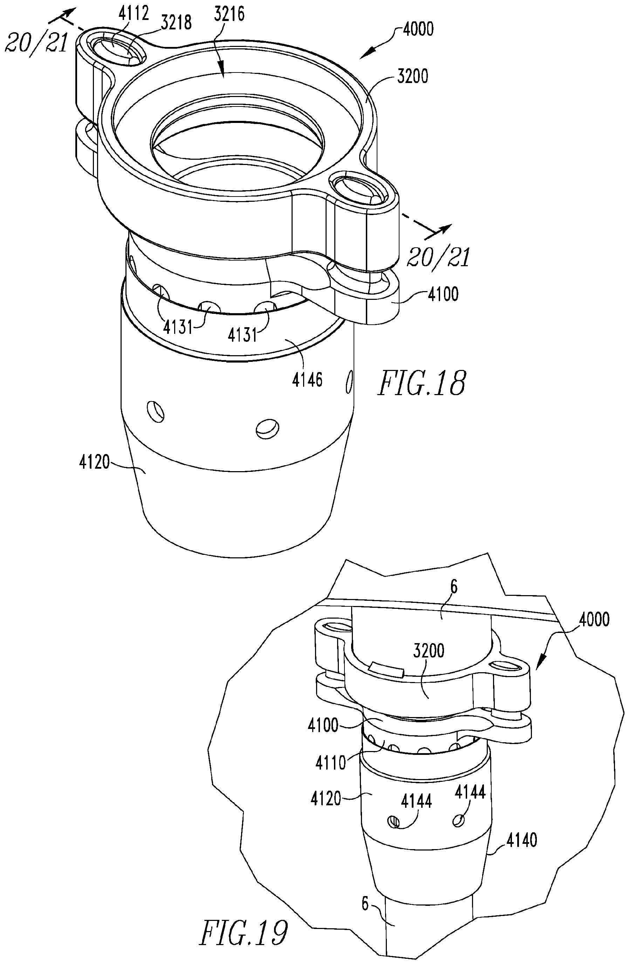

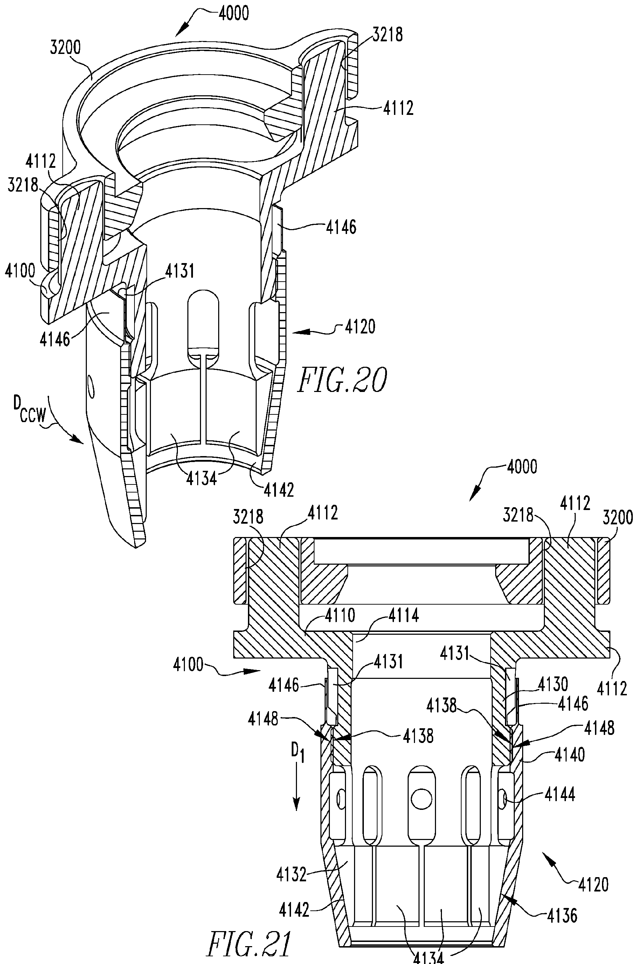

FIGS. 18-21 depict a device 4000 configured to resist, reduce, and/or prevent rotation of the thermal sleeve 10 about an axis thereof relative to the head penetration adapter 6. The device 4000 comprises a first ring 4100 configured to be attached to a thermal sleeve 10 and the second ring 3200, discussed above with regard to FIGS. 16 and 17, configured to be attached to the head penetration adapter 6. The first ring 4100 and the second ring 3200 are configured for operable engagement to resist, reduce, and/or prevent rotation of the thermal sleeve 10 relative to the head penetration adapter 6, as discussed in greater detail below.

The first ring 4100 comprises a body 4110 and two upstanding rod members 4112 extending from the ring body 4110. The ring body 4110 comprises an opening 4114 sized such that the first ring 4100 can slide along the thermal sleeve 10. In the illustrated embodiment, the upstanding rod members 4112 comprise an ellipse cross-section that is non-circular. However, other embodiments are envisioned where the upstanding members 4112 comprise a cylindrical shape, such as the rod members 2014 illustrated in FIG. 2.

Further to the above, the ring body 4110 comprises a mechanical clamp 4120 extending therefrom. The mechanical clamp 4120 comprises an inner housing 4130 extending from the body 4110 of the first ring 4100 and an outer housing 4140 positionable around the inner housing 4130. The outer housing 4140 comprises internal threads 4148 and the inner housing 4130 comprises cooperative external threads 4138. Thus, when assembled together, the threads 4148 of the outer housing 4140 are engaged with the threads 4138 of the inner housing 4130 such that, as the outer housing 4140 is rotated, the outer housing 4140 will translate relative to the inner housing 4130.

Further to the above, the inner housing 4130 comprises a collet 4132 including a plurality of fingers 4134. The fingers 4134 of the collet 4132 are configured to flex inward when an external force is applied to the collet 4132. In the illustrated example, the fingers 4134 of the collet 4132 comprise tapered outer surfaces 4136 which are aligned with a tapered inner surface 4142 of the outer housing 4140 when the outer housing 4140 is threadably engaged with the inner housing 4130. When the outer housing 4140 is rotated in the counter clockwise direction D_{CCW}, for example, the outer housing 4140 will translate in direction D1 and the tapered inner surface 4142 of the outer housing 4140 will engage the tapered outer surfaces 4136 of the inner housing 4130 and deflect the fingers 4134 inward. Other embodiments are envisioned where the outer housing 4140 is rotatable in a clockwise direction to translate the outer housing 4140 in direction D1.

In use, the second ring 3200 is slid along the thermal sleeve 10 until the bottom end of the head penetration adapter 6 is received in the cutout region 3216 of the second ring 3200. An already installed thermal sleeve 10 may be cut, as discussed above, in order to receive the second ring 3200. The second ring 3200 is then welded to the head penetration adapter 6. The first ring 4100 is then installed onto the thermal sleeve 10 and slid along the thermal sleeve 10 until the upstanding rod members 4112 are received within their respective openings 3218 in the second ring 3200. Once the first ring 4100 is at the desired position, the mechanical clamp 4120 can be actuated to secure the first ring 4100 to the thermal sleeve 10. More specifically, the outer housing 4140 of the mechanical clamp 4120 can be rotated, as discussed above, to clamp the inner housing 4130 onto the thermal sleeve 10. Openings 4144 in the outer housing 4140 of the mechanical clamp 4120 may be utilized to facilitate rotation of the outer housing 4140 to secure the first ring 4100 to the thermal sleeve 10. In at least one embodiment, the openings 4144 may be engage by a wrench or any suitable tool to aid the user in rotating the outer housing 4140 relative to the inner housing 4130.

Further to the above, the outer housing 4140 comprises a crimp ring portion 4146 that is configured to be deformed into corresponding slots 4131 defined in the outer diameter of the inner housing 4130 of the first ring 4100 after the inner housing 4130 is clamped to the thermal sleeve 10. The slots 4131 are radially positioned around the outer diameter of the inner housing 4130. The crimp ring portion 4146 is configured to be bent and/or deflected into the slots 4131 to prevent the outer housing 4140 from becoming disengaged with the inner housing 4130 (i.e., prevents the outer housing 4140 from unthreading itself from the inner housing 4130 in service).

Further to the above, when the first ring 4100 is attached to the thermal sleeve 10, the second ring 3200 is attached to the head penetration adapter 6, and the first ring 4100 and second ring 3200 are operably engaged, the device 4000 resists, reduces, and/or prevents the thermal sleeve 10 from rotating about an axis thereof. However, the thermal sleeve 10 is permitted to axially translate due to the relationship between the upstanding rod members 4112 and the openings 4218.

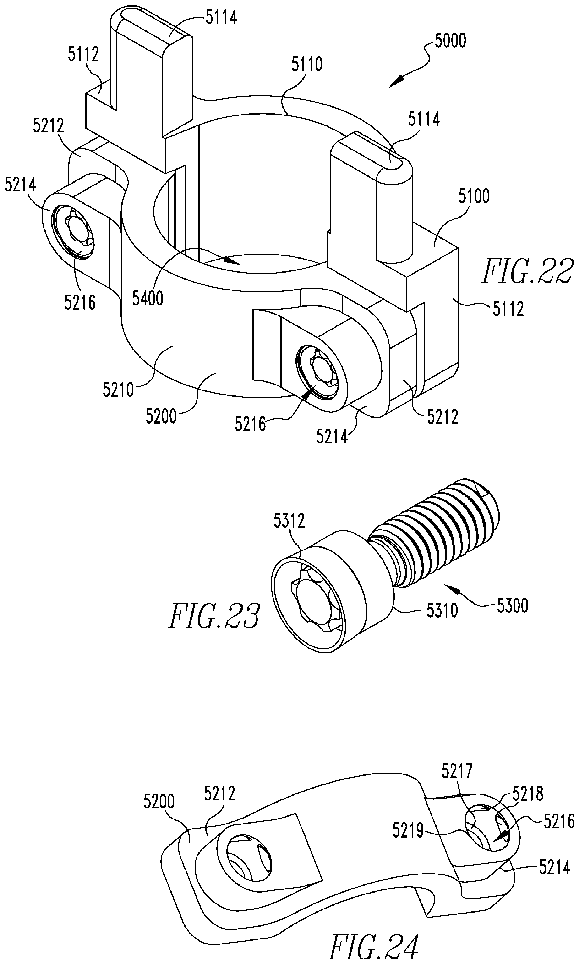

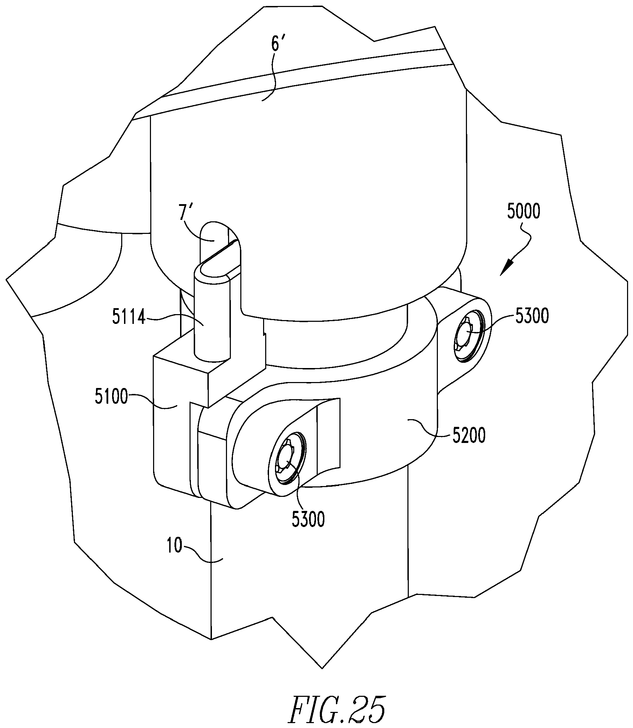

FIGS. 22-25 depict a split clamp assembly 5000 configured to resist, reduce, and/or prevent rotation of the thermal sleeve 10 about an axis thereof relative to a modified head penetration adapter 6'. The split clamp assembly 5000 comprises a first clamp portion 5100 and a second clamp portion 5200 configured to be coupled together via fasteners 5300. The first clamp portion 5100 comprises an arcuate body 5110 including two lug portions 5112 extending therefrom. Each of the lug portions 5112 comprises a threaded hole therein. A pair of upstanding members 5114 extend from the lug portions 5112. In the illustrated embodiment, the upstanding members 5114 comprise a rectangular cross-section with rounded edges. However, other embodiments are envisioned where the upstanding members 5114 comprise a cylindrical shape, or any other suitable shape for engagement with a modified head penetration adapter. In any event, the second clamp portion 5200 comprises an arcuate body 5210 including two lug portions 5212 extending therefrom. The arcuate body 5110 of the first clamp portion 5100 and the arcuate body 5210 of the second clamp portion 5200 form an opening 5400 therebetween when the first clamp portion 5100 and the second clamp portion 5200 are coupled together. The opening 5400 is sized and shaped to receive the thermal sleeve 10. In the illustrated embodiment, the opening 5400 is substantially circular. However, in other embodiments, the opening 5400 can comprise a different shape suitable for receiving a thermal sleeve 10 such as, for example, an oval shape.

Further to the above, the second clamp portion 5200 comprises protrusions 5214 extending from each of the lug portions 5212. Each of the protrusions 5214 comprises an opening 5216 therein which terminates in a step 5217. A threaded hole 5219 extends through the remainder of the protrusion 5214 and the lug portion 5212 on each side of the second clamp portion 5200. The threaded holes 5219 are positioned such that they align with the threaded holes defined in the first clamp portion 5100 when the first clamp portion 5100 and the second clamp portion 5200 are coupled together. Each of the openings 5216 comprises a plurality of cutouts, or pockets 5218 in the sidewall thereof. In at least one embodiment, each opening 5216 comprises four pockets 5218 that are equally radially spaced within the inner diameter of the opening 5216. However, other embodiments are envisioned with more or less than four pockets 5218 that can be equally, or non-equally, radially spaced within the inner diameter of the opening 5216.

In use, the first clamp portion 5100 is positioned on one side of the thermal sleeve 10 and the second clamp portion 5200 is positioned on another side of the thermal sleeve 10. Once the first clamp portion 5100 and the second clamp portion 5200 are at the desired position relative to the modified head penetration adapter 6', the split clamp assembly 5000 can be clamped around the thermal sleeve 10 by installing the fasteners 5300. The split clamp assembly 5000 can be positioned relative to the modified head penetration adapter 6' such that the upstanding members 5114 of the split clamp assembly 5000 are received within axial slots 7' defined in the modified head penetration adapter 6'. In at least one embodiment, the axial slots 7' are defined into the bottom end of the head penetration adapter 6 to create a modified head penetrations adapter 6', for example.

Further to the above, the fasteners 5300 are configured to threadably engage the threaded holes 5219 in the second clamp portion 5200 and extend into the threaded holes in the first clamp portion 5100. As the fasteners are tightened, the opening 5400 will decrease in size and squeeze the split clamp assembly 5000 around the thermal sleeve 10'. When the fasteners 5300 are installed, the head of each fastener 5310 may eventually bottom out on the step 5217 within each opening 5216. Each fastener 5300 comprises a crimp portion 5312 which can be deformed once the fastener 5300 is installed into the split clamp assembly 5000. More specifically, the crimp portion 5312 can be deflected into the pockets 5218 within the sidewalls of the opening 5216 to retain the fasteners 5300 within the split clamp assembly 5000. By crimping the crimp portions 5312, the fastener is prevented from rotating and prevented from becoming a loose part if the fastener 5300 fails in service. In at least one embodiment, after clamping the split clamp assembly 5000 to the thermal sleeve 10, the split clamp assembly 5000 can be welded to the thermal sleeve 10.

Further to the above, the relationship between the upstanding members 5114 and the axial slots 7' in the head penetration adapter 6' resist, reduce, and/or prevent rotation of the thermal sleeve 10 while permitting axial movement of the thermal sleeve 10 relative to the head penetration adapter 6'.

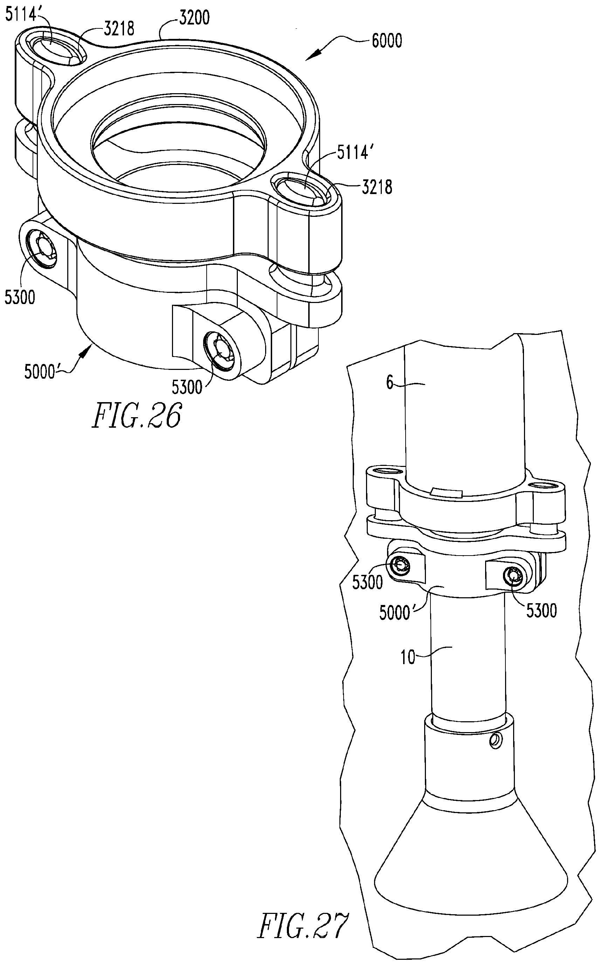

FIGS. 26 and 27 depict a device 6000 configured to resist, reduce, and/or prevent rotation of the thermal sleeve 10 about an axis thereof relative to the head penetration adapter 6. The device 6000 comprises a split clamp assembly 5000', configured to be attached to a thermal sleeve 10, and the second ring 3200 (see FIG. 16 and 18) configured to be attached to the head penetration adapter 6. The split clamp assembly 5000' and the second ring 3200 are configured for operable engagement to resist, reduce, and/or prevent rotation of the thermal sleeve 10 relative to the head penetration adapter 6, as discussed in greater detail below.

The split clamp assembly 5000' is similar to the split clamp assembly 5000 except the split clamp assembly 5000' comprises upstanding members 5114' which comprise an ellipse cross-section that is non-circular. However, other embodiments are envisioned where the upstanding members 5114' comprise a cylindrical shape, such as the rod members 2014 illustrated in FIG. 2.

In use, the second ring 3200 is attached (e.g., welded) to the head penetration adapter 6 as previously discussed with regard to FIGS. 17 and 19. Then, the split clamp assembly 5000' is positioned around the thermal sleeve 10 as was as discussed above with regard to split clamp assembly 5000. The split clamp assembly 5000' is then slid towards the head penetration adapter 6 until the upstanding rod members 5114' are received in the openings 3218 of the second ring 3200. Once the desired positioned is achieved, the split clamp assembly 5000' can be clamped to the thermal sleeve 10 by tightening the fasteners 5300 as was previously discussed. In at least one embodiment, after clamping the split clamp assembly 5000' to the thermal sleeve 10, the split clamp assembly 5000' can be welded to the thermal sleeve 10.

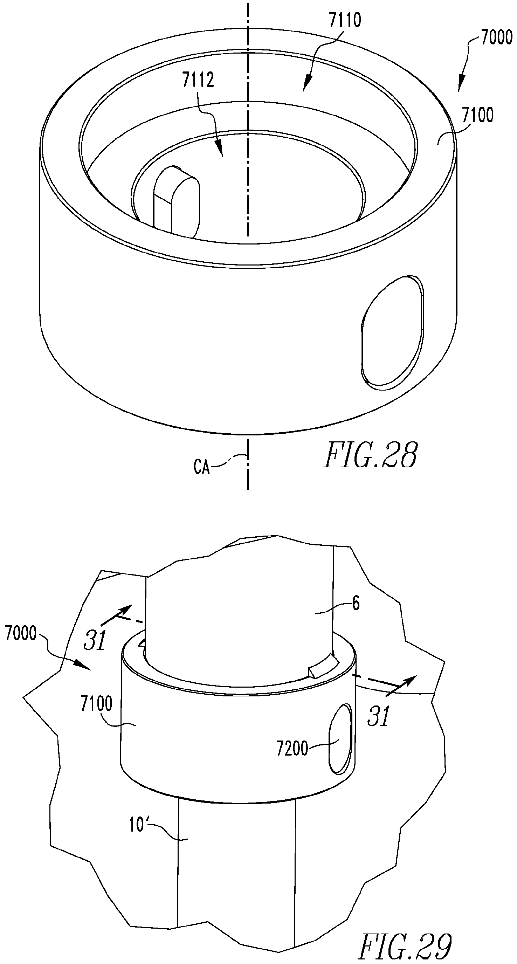

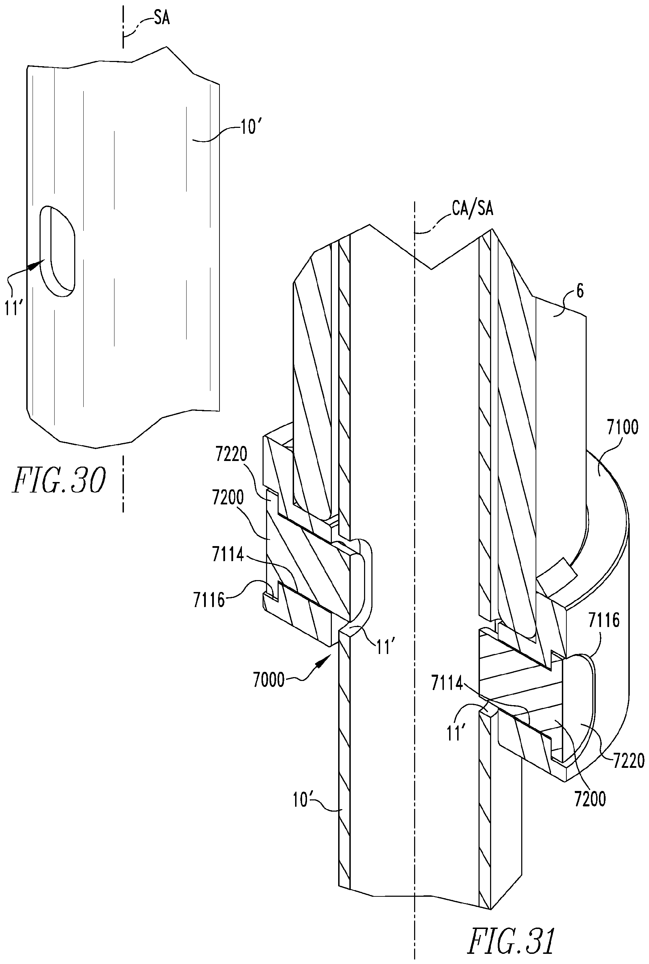

FIGS. 28-31 depict a device 7000 configured to resist, reduce, and/or prevent rotation of a modified thermal sleeve 10' about an axis thereof relative to a head penetration adapter 6. The device 7000 comprises a cylindrical body portion 7100 comprising a through hole 7112 therein. The through hole 7112 defines a central axis CA and is configured to receive the thermal sleeve 10'. The body portion 7100 further comprises a stepped portion 7110 configured to receive the bottom end of the head penetration adapter 6. As illustrated in FIG. 31, the body portion 7100 further comprises a pair of through holes 7114 spaced on either side of the central axis CA. The through holes 7114 define axes that are perpendicular to the central axis CA. Each of the through holes 7114 widen to a counter bore 7116 defined in the outer diameter of the body portion 7100. The device 7000 further comprises a slidable member 7200 including a head portion 7220. The slidable members 7200 are configured to slide within the through holes 7114 and the head portion 7220 of the slidable member 7200 is configured to be receive in the counter bore 7116 of the body portion 7100 of the device 7000.

Further to the above, axial slots 11' are defined one either side of a shaft axis SA defined by the modified thermal sleeve 10'. In at least one embodiment, the axial slots 11' are machined into an existing thermal sleeve 10 to create the modified thermal sleeve 10'. The axial slots 11' are positioned on either side of the shaft axis SA of the modified thermal sleeve 10'. The shaft axis SA of the modified thermal sleeve 10' is coincident with the central axis of the device 7000 when the device 7000 is assembled to the head penetration adapter 6 and the modified thermal sleeve 10', as discussed in greater detail below.

In use, the device 7000 is slid onto the modified thermal sleeve 10' and translated towards the head penetration adapter 6 until the stepped portion 7110 of the device 7000 engages the bottom end of the head penetration adapter 6. The device 7000 is then rotated until the slidable members 7200 are aligned with the axial slots 11' in the modified thermal sleeve 10'. The body portion 7100 of the device 7000 is then welded to the head penetration adapter 6 as illustrated in FIG. 31. The slidable members 7200 can then be slid into the axial slots 11' of the modified thermal sleeve 10' and the head portions 7220 of the slidable members 7200 are then welded to the body portion 7100 of the device 7000. The slidable members 7200 and axial slots 11' are sized and shaped such that, when the slidable members 7200 are received in the axial slots 11', rotational movement of the modified thermal sleeve 10' about the shaft axis SA thereof is restricted while permitting some amount of axial translation of the modified thermal sleeve 10' along the shaft axis SA relative to the head penetration adapter 6.

Further to the above, in at least one alternative embodiment, the slidable members 7200 comprise external threads that mate with internal threads defined within the through holes 7114 of the device 7000. In such an arrangement, the slidable members 7200 are threadably engaged with the body portion 7100 of the device and can be rotated to translate the slidable members 7200 into the axial slots 11' of the modified thermal sleeve 10'. Further, welds may be applied to the head portions 7220 of the slidable members 7200 after the slidable members 7200 are installed.

From the foregoing example embodiments, it is thus to be appreciated that some novel features of the disclosed concept are that the design can be implemented on both replacement compressible thermal sleeves as well as on an existing thermal sleeve. The parts utilized in such arrangements are designed to interface between stationary and movable components composed of different materials. Embodiments of the concept must function submerged in an elevated temperature, highly turbulent environment. Much of the novelty of the device is to allow axial movement of the sleeve during head installation, while restricting motions induced by turbulent cross-flow. The spline/keyway design permits axial motion while restraining the 5 other degrees of freedom (translations perpendicular to the thermal sleeve axis and all rotations). It is to be appreciated that the arrangements provided herein may generally be reversed (i.e., coupled to the alternative of the head penetration adapter/thermal sleeve) without varying from the scope of the present disclosure.

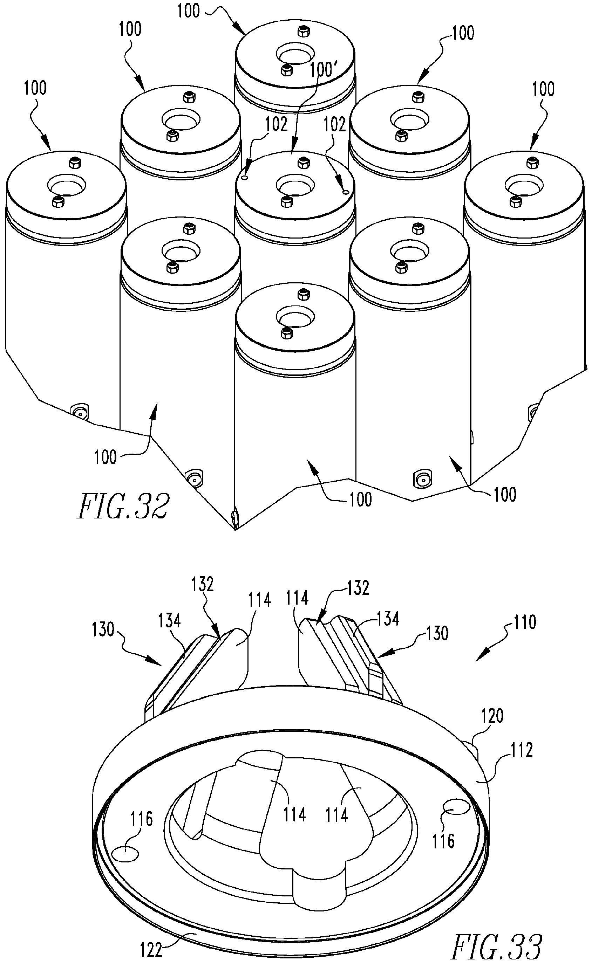

As an alternative to the embodiments previously discussed which minimize/eliminate wear to one or both of the thermal sleeve and/or the associated head penetration adapter by inhibiting rotation of the thermal sleeve by utilizing interacting elements coupled to the thermal sleeve and the penetration adapter, the disclosed concept also provides embodiments which utilize interactions between the guide funnel of a thermal sleeve and one or more elements coupled to the corresponding guide tube below. An arrangement of a plurality of guide tubes 100 in which a guide tube 100' thereof has been modified in accordance with at least one embodiment of the disclosed concept is shown in FIG. 32. More particularly, modified guide tube 100' has been modified to include a plurality (two are shown) of threaded blind holes 102 formed in the top thereof. In at least one embodiment, the threaded blind holes 102 were formed by first forming blind holes via EDM, with tapping thereof then carried out using a conventional tap, remotely operated. It is to be appreciated, however, that threaded blind holes 102 may be formed via any other suitable method without varying from the scope of the present disclosure. It is also to be appreciated that the quantity of threaded blind holes 102 may be varied without varying from the scope of the present disclosure.

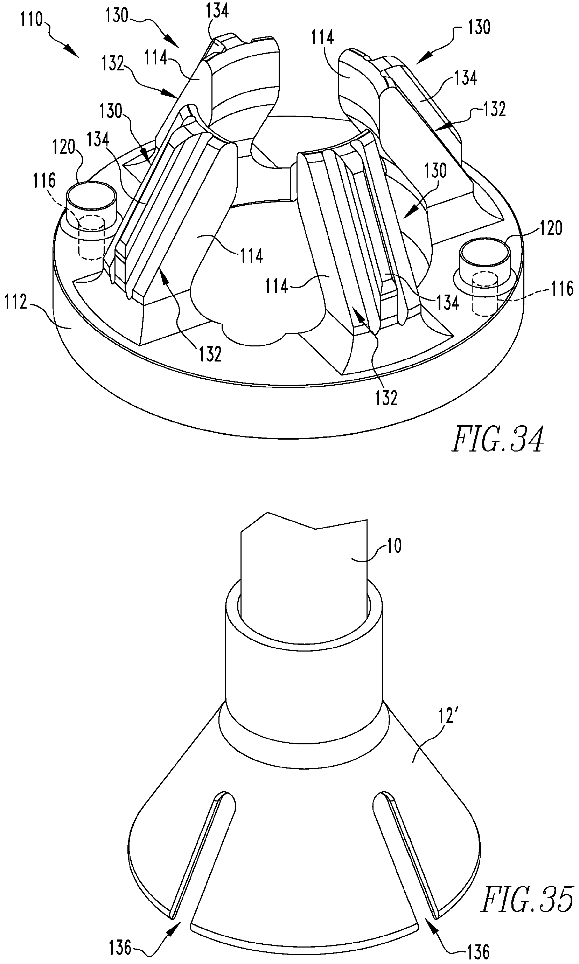

Referring now to FIGS. 33 and 34, a wear mitigation device 110 is depicted. The wear mitigation device 110 includes a base 112, formed as a circular ring, that is configured to be coupled to the guide tube 100' and a plurality of protruding elements, or protruding members 114, each extending upward from the base 112, that are sized and configured to engage a guide funnel of a thermal sleeve, as will be discussed in further detail below. The wear mitigation device 110 shown in the figures includes four protruding members 114, however, it is to be appreciated that the quantity of protruding members 114 may be varied without varying from the scope of the present disclosure.

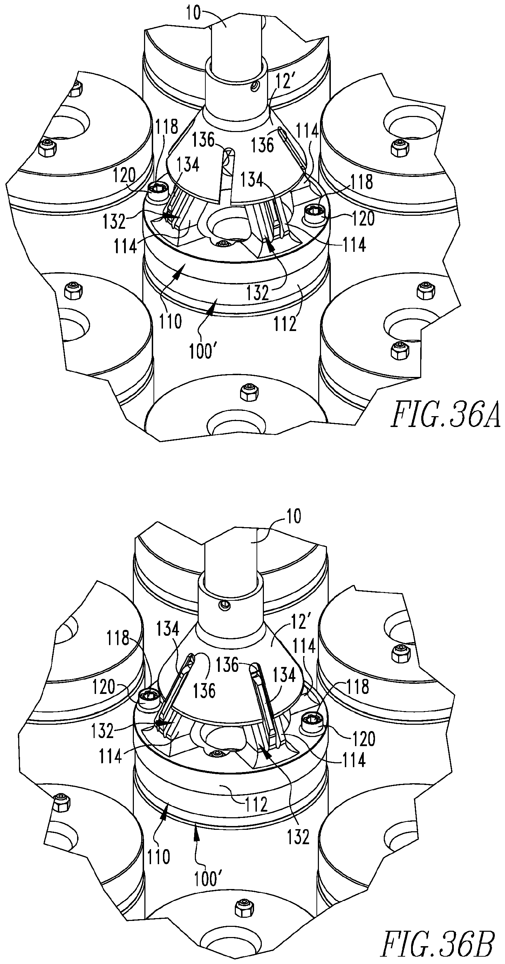

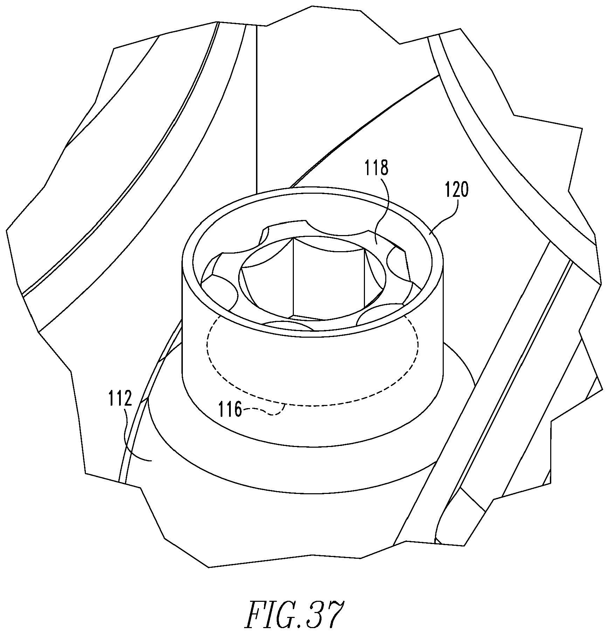

To facilitate coupling of the base 112 to the modified guide tube 100', the base 112 includes a plurality of apertures 116 defined therethrough. Each aperture 116 is positioned so as to align with a corresponding one of the plurality of threaded blind holes 102 of modified guide tube 100' and to receive a threaded bolt 118 therethrough, such as shown in FIGS. 36A and 36B, which threadingly engages the corresponding threaded blind hole 102. In order to prevent each threaded bolt 118 from loosening, the base 112 further includes a plurality of collars 120, with each collar 120 being disposed about a corresponding one of the apertures 116 and extending upward from the base 112, as shown in FIG. 37. Each collar 120 is deformable inward toward the head portion of each threaded bolt 118 via a crimping tool or other suitable mechanism in a manner such that the collar 120 may be deformed against the head portion of the bolt 118, thus preventing rotation of the bolt 118. Additionally, the collar 120 prevents loose parts from being introduced into the reactor in the unlikely event of the head portion of the bolt 118 separating from the remainder of bolt 118. In order to properly align the base 112 with the guide tube 100', the base 112 may include a circumferential lip 122 (FIG. 33) extending downward therefrom which is sized and configured to cooperatively engage a portion of the modified guide tube 100' in a manner that aligns the base 110 with the modified guide tube 100'.

Referring again to FIGS. 33 and 34, as well as to FIGS. 35, 36A and 36B, each of the protruding members 114 includes a portion 130 that is configured to engage a corresponding portion of a guide funnel 12' of thermal sleeve 10. In the example of FIGS. 33, 34, 36A and 36B, the portion 130 includes an outward facing surface 132 that is disposed at an angle that corresponds to the angle of an inner conical surface of the guide funnel 12'. The portion 130 further includes a key 134 extending further outward from surface 132. In the illustrated embodiment, the key 134 is in the form of a vertically oriented ridge-like element which is sized and configured to cooperatively engage a corresponding slot 136 (e.g., formed via EDM machining or other suitable method) defined in the guide funnel 12'. The engagement between each key 134 and corresponding slot 136 resists, reduces, and/or prevents rotation of the thermal sleeve 10, thus reducing wear otherwise resulting from rotation. FIG. 36A shows an example of a potential initial "raised up" orientation of the guide funnel 12' on wear mitigation device 110. Thermal sleeve 10 and guide funnel 12' thereof will rotate as a result of coolant flow until oriented such that slots 136 align with keys 134, thus causing guide funnel 12' and thermal sleeve 10 to drop into the "fixed" position such as shown in FIG. 36B.

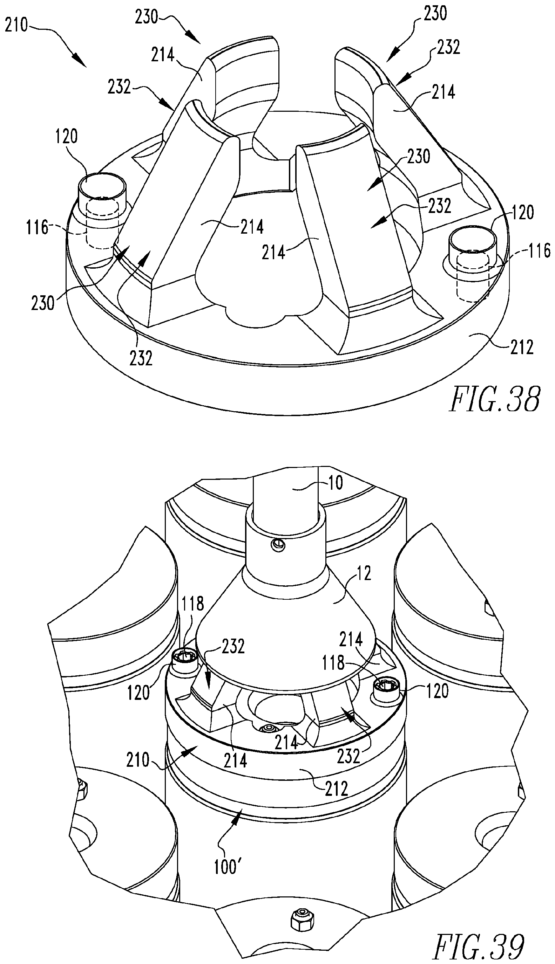

FIGS. 38 and 39 depict a wear mitigation device 210. The wear mitigation device 210 is similar to the device 110 previously discussed. The wear mitigation device 210 comprise a based 212, formed as a circular ring that is configured to be coupled to the guide tube 100', and a plurality of protruding members 214, each extending upward from the base 212, that are sized and configured to engage a guide funnel 12 of a thermal sleeve10, as will be discussed in greater detail below.

A portion 230 of each protruding member 214 of the device 210 is configured to engage a corresponding portion of a guide funnel 12 of the thermal sleeve 10 and includes an outward facing surface 232 that is disposed at an angle that corresponds to the angle of an inner conical surface of guide funnel 12. As device 210 does not include any key, such as keys 134 of device 110, the device 210 is configured to provide additional support surfaces to thermal sleeve 10 and guide funnel 12 thereof, which helps to reduce wear thereto, and reduce the rate at which thermal sleeve 10 drops, while resisting, reducing, and/or preventing rotation of thermal sleeve 10 and guide funnel 12 thereof (e.g., via increased frictional forces due to increased surface contact areas).

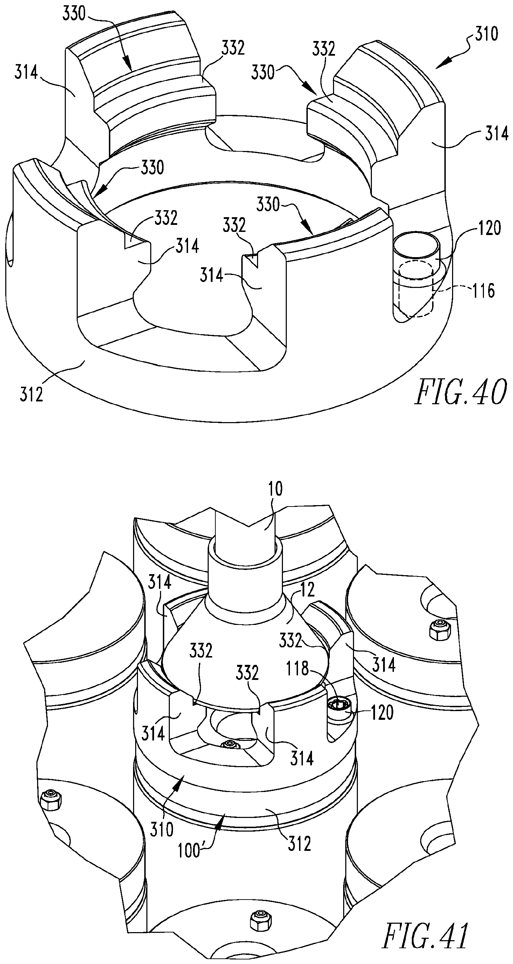

FIGS. 40 and 41 depict a wear mitigation device 310. The wear mitigation device 310 is similar to the wear mitigation devices 110 and 210. The wear mitigation device 310 includes a base 312, formed as a circular ring, that is configured to be coupled to the guide tube 100', and a plurality of protruding members 314 extending upward from the base 312. A portion 330 of each of the protruding members 314 of the device 310 is configured to engage a corresponding portion of a guide funnel 12 of the thermal sleeve 10. Each portion 330 comprises an inward facing notch 332 that is sized and configured to engage a portion of the outer periphery of the guide funnel 12. As the device 310 does not include any key, such as keys 134 of device 110, the device 310, similar to the device 210, is configured to provide additional support surfaces to thermal sleeve 10 and guide funnel 12 thereof, which helps to reduce wear thereto, and reduces the rate at which the thermal sleeve 10 drops, while resisting, reducing, and/or preventing rotation of thermal sleeve 10 and the guide funnel 12 thereof (e.g., via increased frictional forces due to increased surface contact areas).

As an alternative to the previous devices 110, 210 and 310 which utilized bases 112, 212 and 312 that are bolted to a modified guide tube 100', some example embodiments which instead clamp on to an unmodified guide tube 100 are discussed in greater detail below.

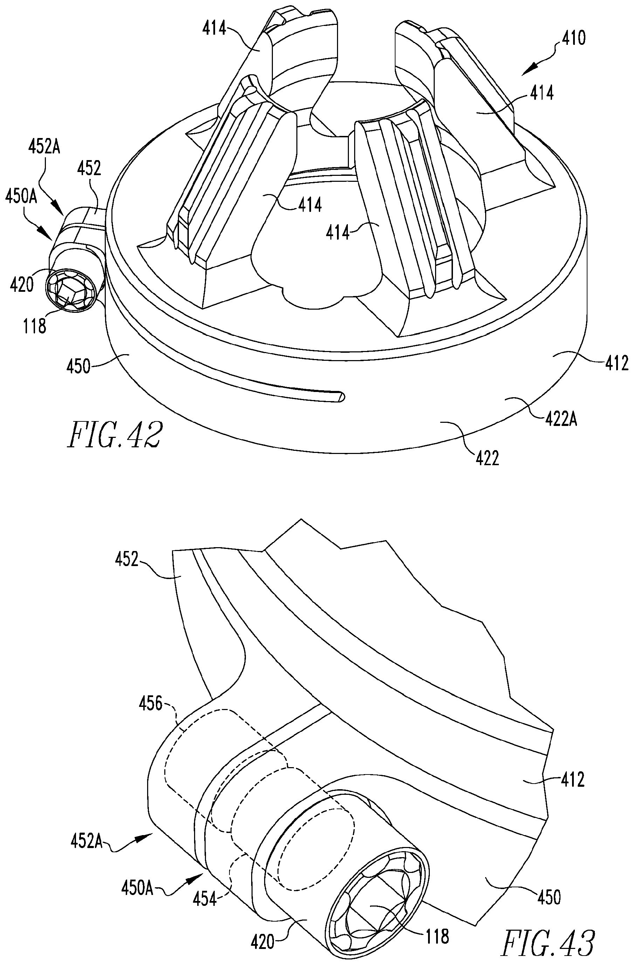

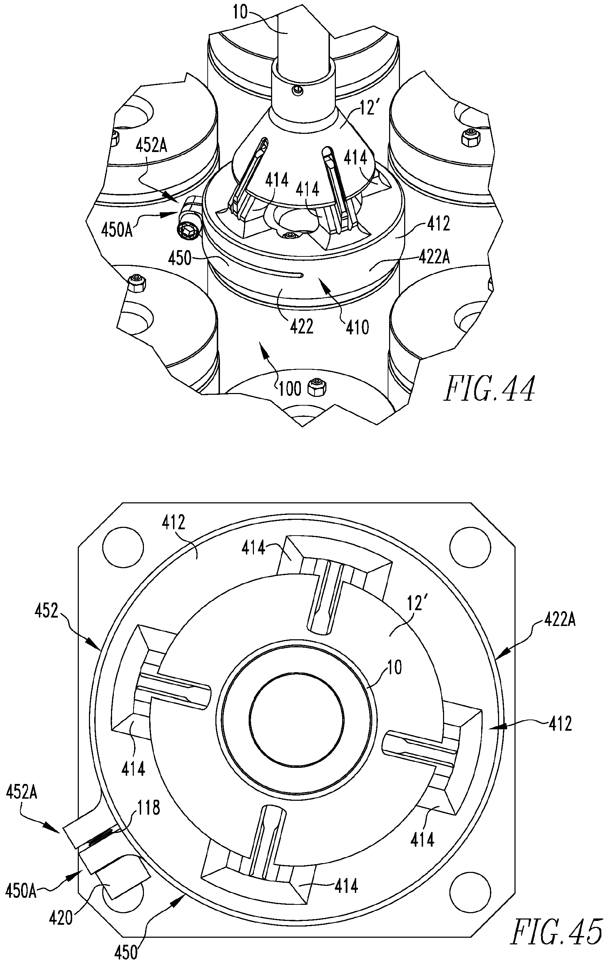

FIGS. 42-45 depict a wear mitigation device 410. The wear mitigation device 410 is similar to the wear mitigation devices 110, 210, and 310. For example, the wear mitigation device includes a base 412 somewhat similar to that of devices 110, 210 and 310, previously discussed, except base 412 is not configured to be bolted to a guide tube 100 but instead is configured to be clamped thereto, as discussed in greater detail below.

Wear mitigation device 410 includes a plurality of protruding members 414 extending upward from base 412 that are identical to the plurality of protruding members 114 of wear mitigation device 110 discussed above (see FIGS. 33 and 34). The base 412 includes a bottom portion 422 that is configured to generally surround a top portion of a guide tube 100. The bottom portion 422 includes a first arcuate arm member 450 that extends circumferentially in a first direction around a portion of guide tube 100 from a portion 422A of the bottom portion 422 to a distal end 450A, and a second arcuate arm member 452 that extends circumferentially in a second direction (opposite the first direction) around another portion of guide tube 100 from portion 422A of the bottom portion 422 to a distal end 452A that is disposed adjacent, but separate from, distal end 450A of the first arm member 450. Each of the arm members 450 and 452 are elastically deformable such that the distal ends 450A and 452A thereof can be compressed together in a manner that clamps the base 412, and thus wear mitigation device 410, to the guide tube 100. In the illustrated embodiment, the distal end 450A includes an aperture 454 (FIG. 43) that is configured to allow a portion of a threaded bolt 118 to pass therethrough. The distal end 450A further comprises a crimpable collar 420 positioned about the aperture 454 that is configured to function in a manner similar to collar 120 previously discussed. Distal end 452A includes a threaded aperture 456 (FIG. 43) that is configured to be threadingly engaged by the threaded bolt 118. It is to be appreciated, that other suitable arrangements for tightening (or loosening) arm members 450 and 452 may be employed without varying from the scope of the present disclosure.

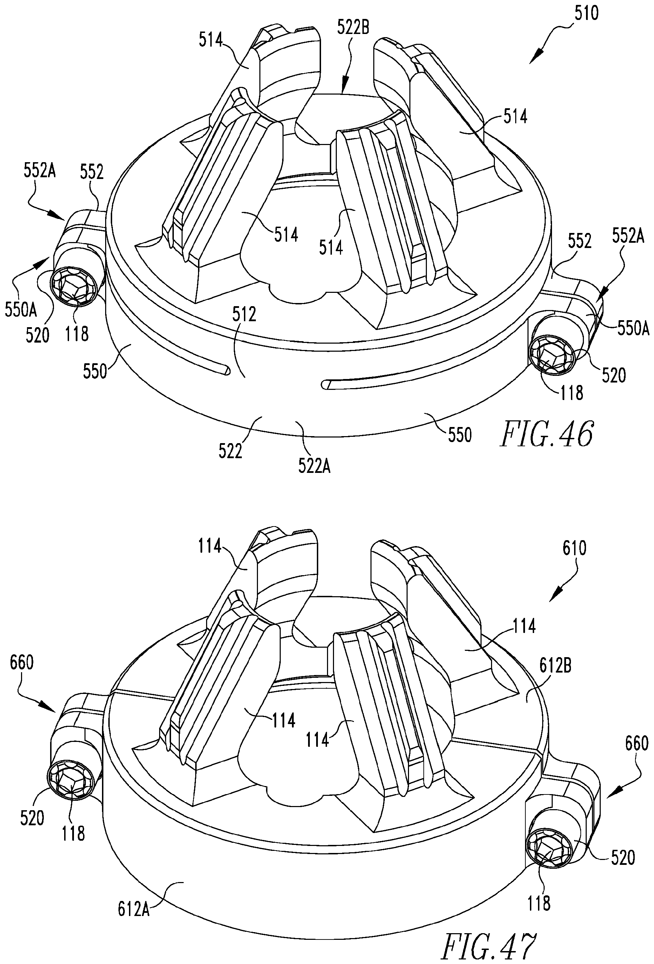

FIG. 46 depicts a wear mitigation device 510 that is similar to the wear mitigation devices 410. For example, the wear mitigation device 510 includes a base 512 that is similar to that of device 410 except the base 512 comprises two separate clamping locations on opposite sides of the base 512 which are configured to clamp the wear mitigation device 510 to a guide tube 100. More specifically, the base 512 includes a first set of first and second arcuate arm members 550 and 552 and a second set of first and second arcuate arm members 550 and 552, with each set functioning similar to the arrangement of the first and second arcuate arm members 450 and 452 of device 410, as discussed in greater detail below.

The wear mitigation device 510 includes a plurality of protruding members 514 extending upward from base 512 that are identical to the plurality of protruding members 114 of wear mitigation device 110 discussed above (see FIGS. 33 and 34). The base 512 includes a bottom portion 522 that is configured to generally surround a top portion of a guide tube 100. The bottom portion 522 includes the pair of first arcuate arm members 550 which extend circumferentially around a first portion of guide tube 100 from a portion 522A of the bottom portion 522. Each of the arcuate arm members 550 terminates at a distal end 550A. The bottom portion 522 further comprises the pair of second arcuate arm members 552 which extend circumferentially around a second portion (opposite the first portion) of the guide tube 100 from a portion 522B of the bottom portion 522. Each of the second arcuate arm members 552 terminates at a distal end 552A that is disposed adjacent, but separate from, a corresponding distal end 550A of each of the first arm members 550. Each of the arm members 550 and 552 are elastically deformable such that their respective distal ends 550A and 552A can be compressed together in a manner that clamps the base 512, and thus wear mitigation device 510, to the guide tube 100.

Further to the above, the distal ends 550A include an aperture, similar to aperture 454 (FIG. 43), that is configured to allow a portion of a threaded bolt 118 to pass therethrough. The distal ends 550A further comprises a crimpable collar 520 positioned about each aperture that is configured to function in a manner similar to collar 120 previously discussed. Further, the distal ends 552A include a threaded aperture, similar to threaded aperture 456 (FIG. 43), that is configured to be threadingly engaged by the threaded bolts 118. It is to be appreciated, that other suitable arrangements for tightening (or loosening) arm members 550 and 552 may be employed without varying from the scope of the present disclosure.

FIG. 47 illustrates another wear mitigation device 610 in accordance with yet another embodiment that is similar to the devices 410 and 510 previously discussed, except the base of the device 610 does not utilize any arm members to secure the device 610 to a guide tube 100. More specifically, the base is formed as two separate portions 612A and 612B, which are coupled together via suitable adjustable fastening mechanisms 660. In the illustrated example, the fastening mechanisms 660 are similar to the arrangement used to tighten distal ends 550A and 552A of devices 410 and 510 previously discussed, however, it is to be appreciated that other suitable fastening arrangements may be employed without varying from the scope of the present disclosure.

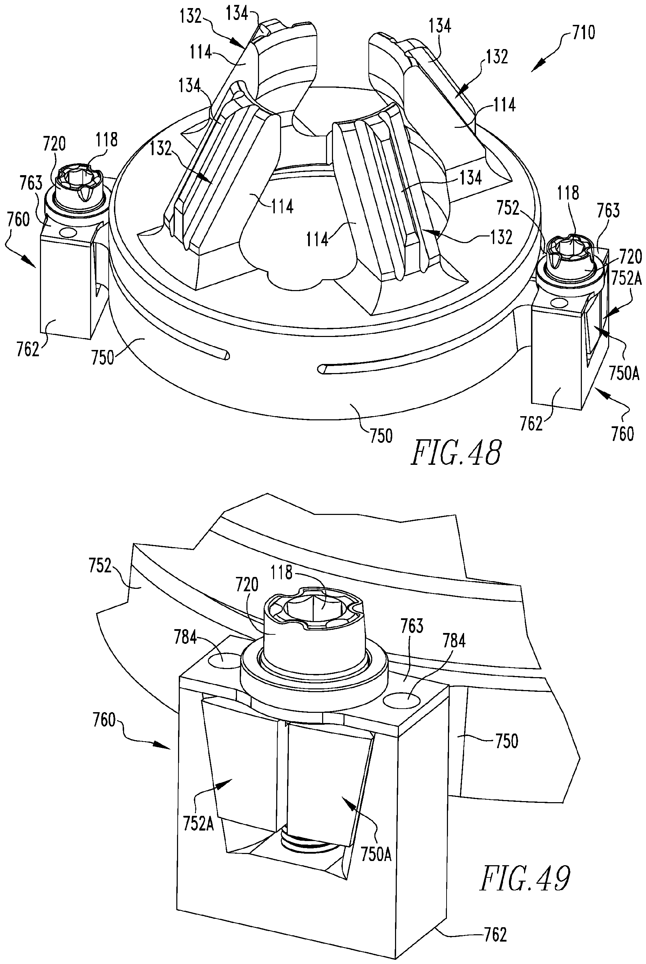

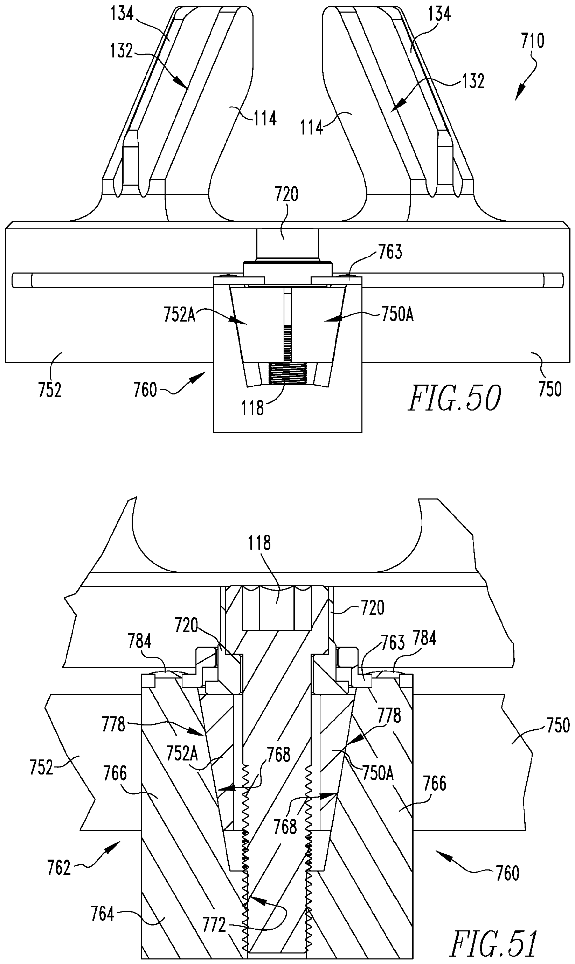

FIGS. 48-54 depict a wear mitigation device 710 similar to devices 510 and 610 (FIGS. 46 and 47). For example, the wear mitigation device 710 comprises distal ends 750A and 752A of first and second arcuate arm members 750 and 752 similar to the devices 510 and 610. Further, the wear mitigation device 710 comprises protruding members 114 which include outwardly facing surfaces 132 and keys 134, as previously discussed. The wear mitigation device 710 comprises vertical coupling arrangements 760 configured to couple together the distal ends 750A and 752A of the first and second arcuate arm members 750 and 752, as discussed in greater detail below.

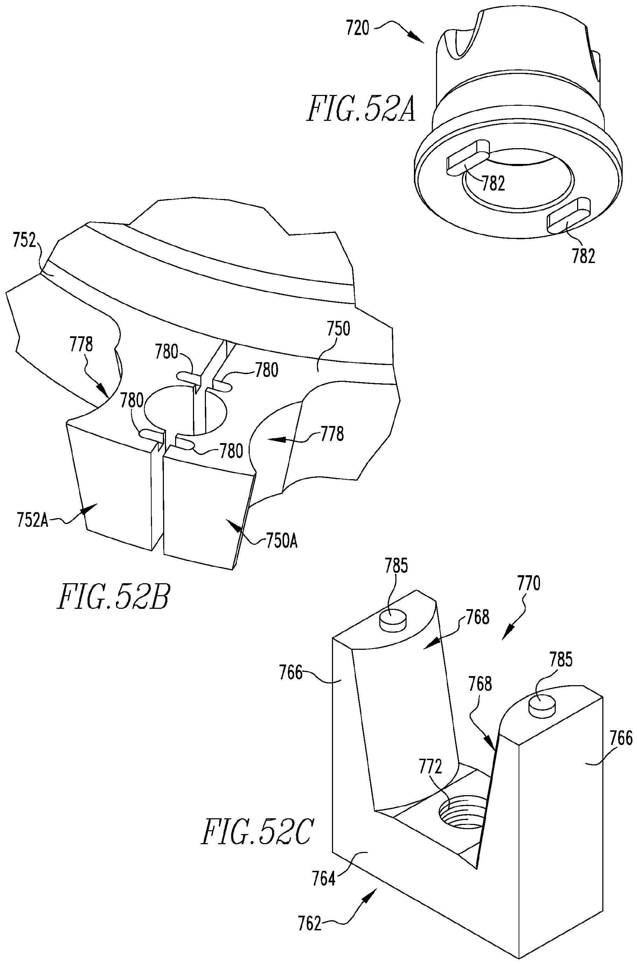

Each vertical coupling arrangement 760 includes a clamping wedge 762, a crimp cup 720, a retention plate 763, and a threaded bolt 118. Referring primarily to FIG. 52C, the clamping wedge 762 is formed as a generally U-shaped member including a base 764 and a pair of vertically extending members 766 extending upward from the base 764. Each of the vertically extending members 766 includes an inward facing surface 768 that is disposed at an outward angle such that a generally V-shaped groove 770 is defined between inward facing surfaces 768. In the example illustrated, each of inward facing surfaces 768 are shaped as a portion of a cylinder, however it is to be appreciated that other arrangements may be employed without varying from the scope of the present disclosure. The base 764 includes a vertically oriented threaded hole 772 defined therein which is sized and configured to be threadingly engaged by a threaded portion of the bolt 118.

Referring primarily to FIG. 52B, each of distal ends 750A and 752A of arcuate arm members 750 and 752 include an engagement surface 778 that is correspondingly shaped and positioned to engage with a corresponding one of the inward facing surfaces 768 of the clamping wedge 762. Each of the distal ends 750A and 752A also include slots 780 which are engaged by cooperatively shaped protrusions 782 (FIG. 52A) that extend from a bottom surface of the crimp cup 720. When assembled, each of distal ends 750A and 752A are positioned within the V-shaped groove 770 of the clamping wedges 762 such that engagement surfaces 778 are engaged with inward facing surfaces 768. Apertures in the retention plate 763 are aligned with protrusions 785 extending above the vertically extending members 766 of the clamping wedge 762. The retention plate 763 is then is coupled (e.g., via plug welds 784) to the tops of the vertically extending members 766 of the clamping wedge 762 so as to capture the distal ends 750A and 752A within the V-shaped groove 770. The bolt 118 is then inserted through the crimp cup 720, passed between distal ends 750A and 752A and into threaded hole 772 in base 764 of clamping wedge 762.

In use, the base of the wear mitigation device 710 is placed around the guide tube 100 and then the bolts are tightened to clamp the wear mitigation device 710 to the guide tube 100. More specifically, when the bolt 118 is rotated in the clockwise direction, for example, the clamping wedge 762 will move upward (i.e., towards the crimp cup 720 of the bolt 118). The inward facing surfaces 768 of the clamping wedge 762 will engage the engagement surfaces 778 of the distal ends 750A and 752A as the clamping wedge 762 moves upward. Thus, the distal ends 750A and 752A are clamped together, and thus, the wear mitigation device 710 is clamped around the guide tube 100 when the bolts 118 are rotated in a clockwise direction. Other embodiments are envisioned where the bolts 118 are rotated in a counter clockwise direction to clamp the wear mitigation device to the guide tube 100.

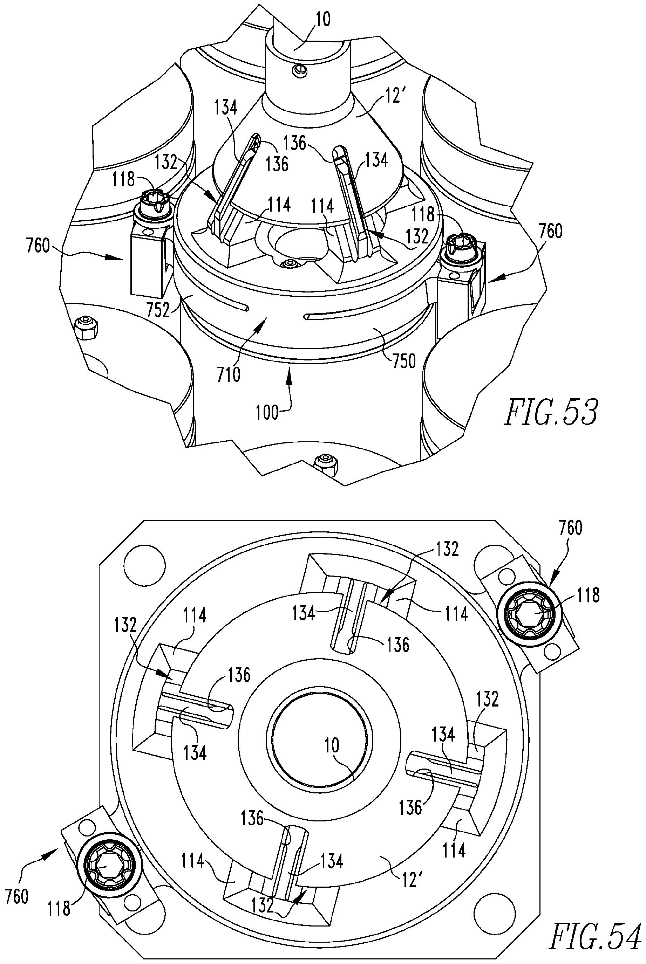

It is to be appreciated that each vertical coupling arrangement 760 is designed so as to be fully assembled (i.e., as shown in Figures, 48-51) in both a fully loosened positioning (i.e., when first and second arcuate arm members 750 and 752 are in a completely untightened positioning prior to install on a guide tube 100) as well as in a fully tightened positioning (i.e., when first and second arcuate arm members 750 and 752 are tightened against a guide tube 100 (i.e., as shown in FIG. 53) and provides for a vertically arranged bolt 118 that can be readily accessed during installation and/or removal of wear mitigation device 710 from a guide tube 100.

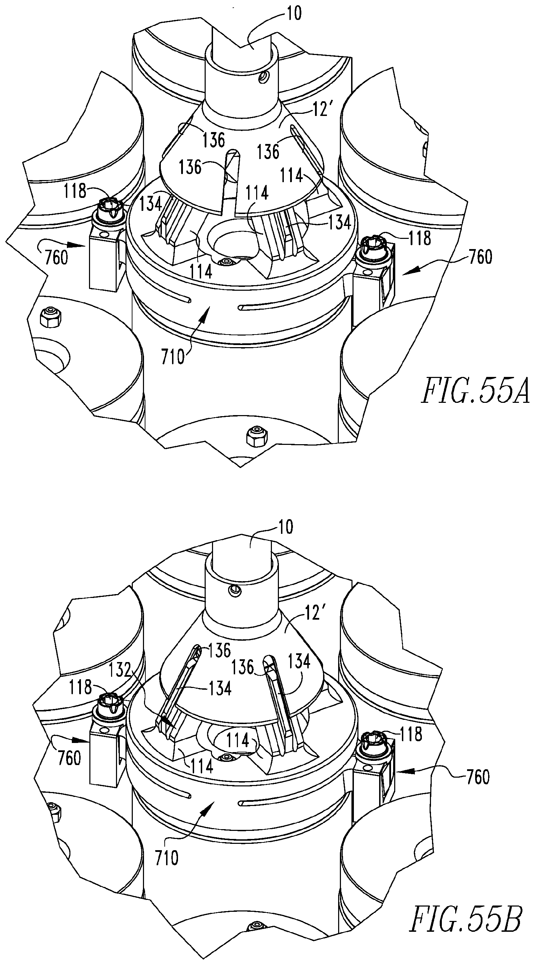

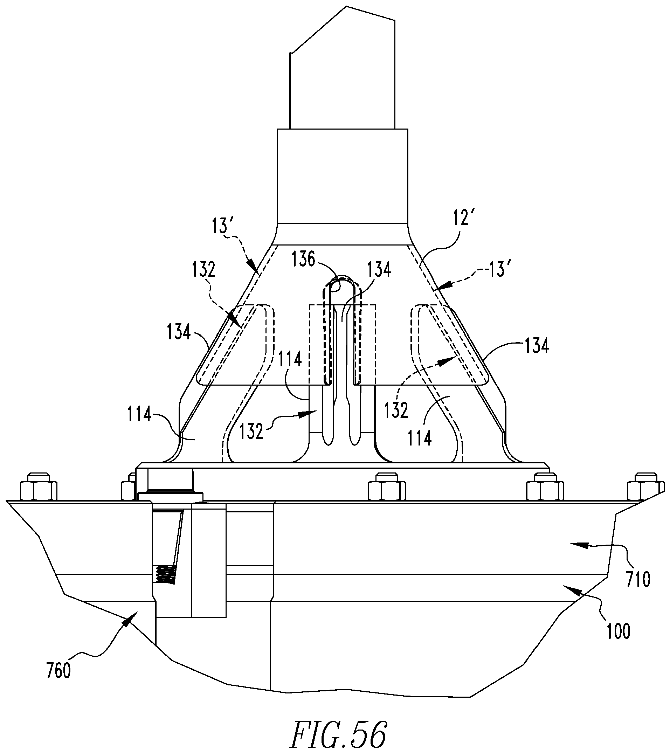

Similar to the arrangement of FIG. 36A, FIG. 55A shows an example of a potential initial "raised up" orientation of guide funnel 12' on wear mitigation device 710. Thermal sleeve 10 and guide funnel 12' thereof will rotate as a result of coolant flow until oriented such that the slots 136 align with the keys 134, thus causing the guide funnel 12' and the thermal sleeve 10 to drop into the "fixed" position such as shown in FIG. 55B. However, unlike the arrangement of FIG. 36B in which the outward facing surfaces 132 of device 110 were in contact with the inward facing conical surface 13' of guide funnel 12', the protruding members 114 of the device 710 are sized and configured such that the outward facing surfaces 132 thereof are spaced apart from the inward facing conical surface 13' of guide funnel 12' when guide funnel 12' is in the "fixed" position, as shown in FIGS. 55B and 56. It is to be appreciated that such an arrangement of the device 710 serves to resist and/or reduce and/or prevent rotation of thermal sleeve 10 and guide funnel 12' thereof, while not preventing axial and lateral (to an extent) movement of guide funnel 12' and thermal sleeve 10. Such an arrangement ensures that the flanged top of the thermal sleeve 10 remains in contact with the head penetration adapter 6, thus preventing thermal continuity with the water inside of the CRDM latch assembly.

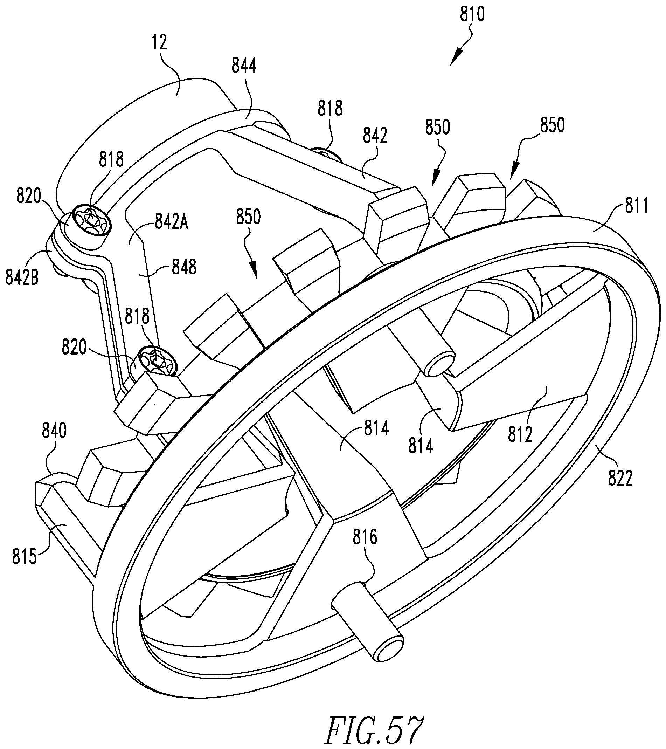

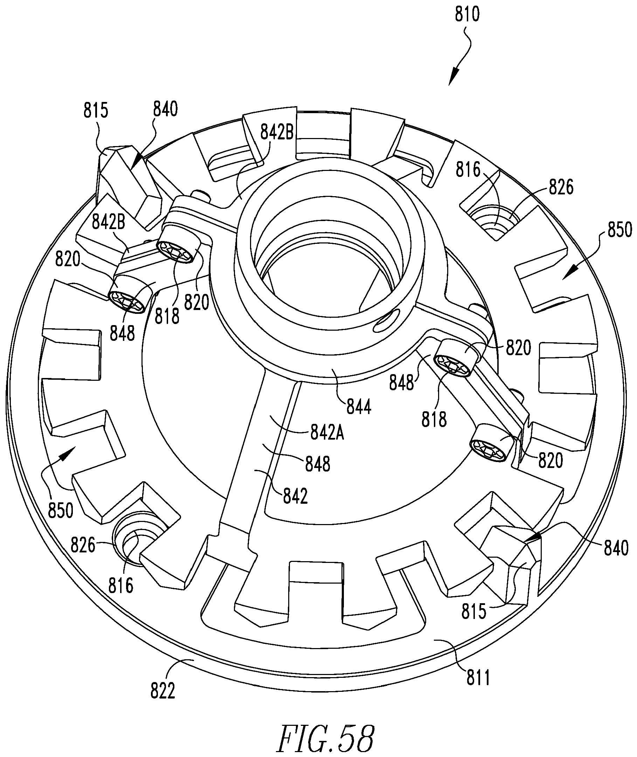

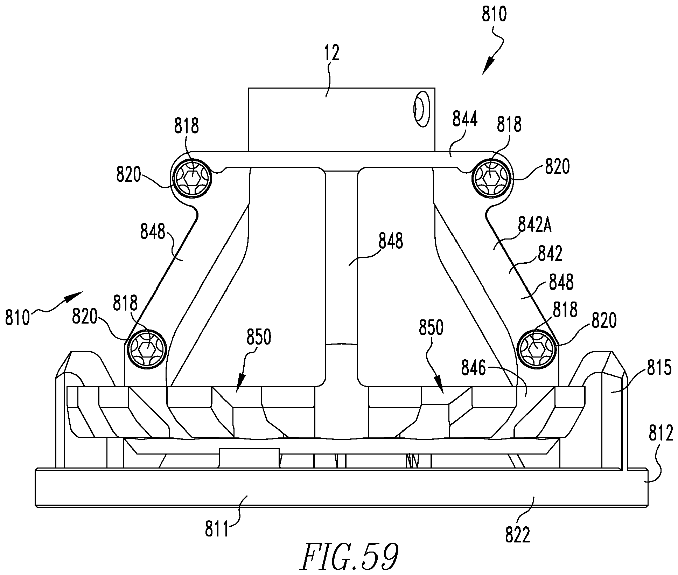

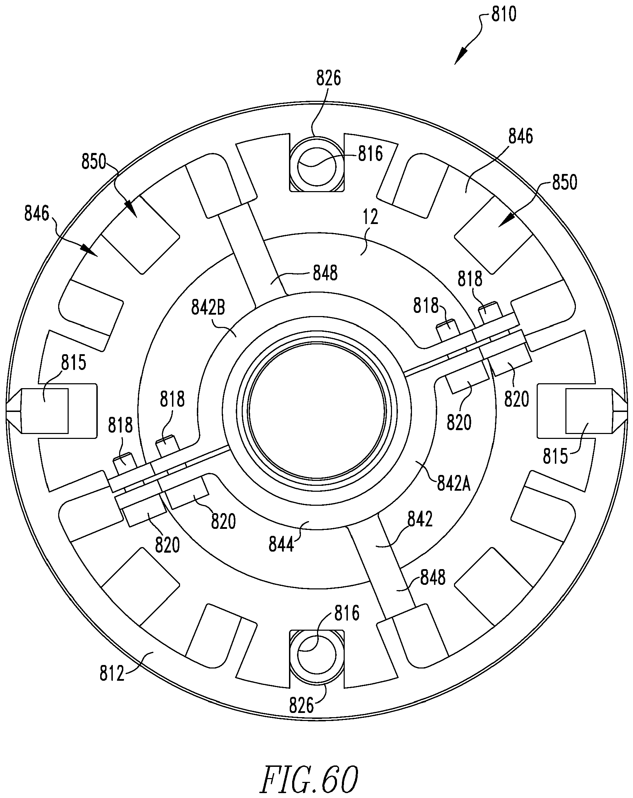

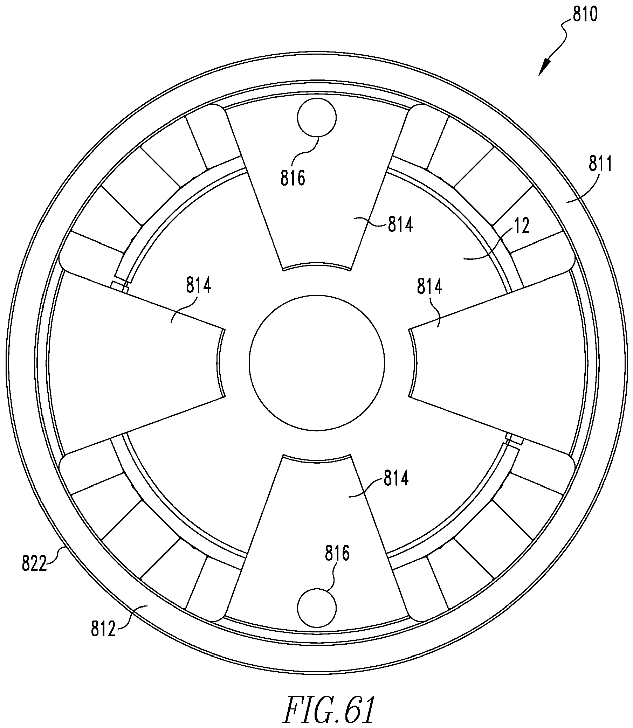

FIGS. 57-61 depict a wear mitigation arrangement 810 comprising a base portion 811 having a base 812, formed as a circular ring, that is configured to be coupled to a modified guide tube 100' (as previously discussed, e.g., see FIG. 32). The wear mitigation device 810 further comprises a plurality of inner protruding members 814, and a plurality of outer protruding members 815. Each inner protruding member 814 extends generally upward and inward from a radially inner portion of base 812 and is sized and configured to engage the inner conical surface of a guide funnel 12 of a thermal sleeve 10. In the illustrated embodiment, the wear mitigation arrangement 810 includes four inner protruding members 814, however, it is to be appreciated that the quantity of protruding members 814 may be varied without varying from the scope of this disclosure. Each outer protruding member 815 extends generally upward from a radially outward portion of base 812 and includes a ridge 840 facing outward and slightly upward. The wear mitigation arrangement 810 includes two outer protruding members 815, however, it is to be appreciated that the quantity of outer protruding members 815 may be varied without varying from the scope of the present disclosure.

In order to couple the base 812 to the modified guide tube 100', the base 812 includes a plurality of apertures 816 defined therethrough. Each aperture 816 is positioned so as to align with a corresponding one of the plurality of threaded blind holes 102 of modified guide tube 100'(previously discussed) and to receive a threaded bolt (such as threaded bolt 118 of FIGS. 36A and 36B) therethrough which threadingly engages the corresponding threaded blind hole 102 (e.g., similar to the arrangements shown in FIGS. 36A and 36B). In the illustrated embodiment, each aperture is surrounded by a counter bore 826 in the base 812 to seat the head of the threaded bolt. However, other embodiments are envisioned where each aperture is surrounded by a collar that is crimpable, as previously discussed, to prevent the threaded bolts from loosening in service. In order to properly align base 812 with guide tube 100', base 812 may include a circumferential lip 822 that extends downward therefrom which is sized and configured to cooperatively engage a portion of modified guide tube 100' in a manner that aligns base 812 with modified guide tube 100'.

Continuing to refer to FIGS. 57-61, the wear mitigation arrangement 810 further includes a cage 842 which is configured to be generally coupled to the guide funnel 12 just above the conical portion thereof and engage the base portion 811 in a manner that inhibits rotation of the guide funnel 12. More specifically, the cage 842 includes an upper collar 844, a lower ring 846, and a plurality of connecting members 848 which span between the upper collar 844 and the lower ring 846 connecting the two upper collar 844 and lower ring 846 together. The lower ring 846 includes a plurality of circumferentially spaced notch portions 850 defined in the lower ring 846. Each notch portion 850 is configured to engage one of the correspondingly positioned outer protruding member 815 of the base portion 811 in a manner that inhibits rotation of the guide funnel 12. In the illustrated embodiment of FIGS. 57-61 only two notch portions 850 are engaged by outer protruding members 815 of base portion 811. However, other embodiments are envisioned with more or less than two notch portions 850 are engaged by more or less than two outer protruding members 815 (i.e., more or less than two outer protruding members 815 may be provided).

Further to the above, the cage 842 is formed as two separate portions 842A and 842B, which are coupled together via threaded bolts 818. In the illustrated embodiment the bolts are positioned at the top and bottom of the cage 842 and on either side of the cage 842 (i.e., a total of four bolts 818 are provided). Other embodiments are envisioned with more or less than four bolts, for example. The cage 842 further comprises crimpable collars 820, which function in the same manner as those previously discussed, extending from portion 842A of the cage 842. The collars 820 surround the head portion of each bolt 818 when the bolts 818 are assembled to the cage 842. It is to be appreciated that by being separable into two portions 842A and 842B, the cage 842 may readily be retrofitted to the guide funnel 12 on an installed thermal sleeve 10. It is also to be appreciated that the cage 842 may be formed as a single unitary member or in more than two portions which may be coupled together without varying from the scope of the present disclosure.

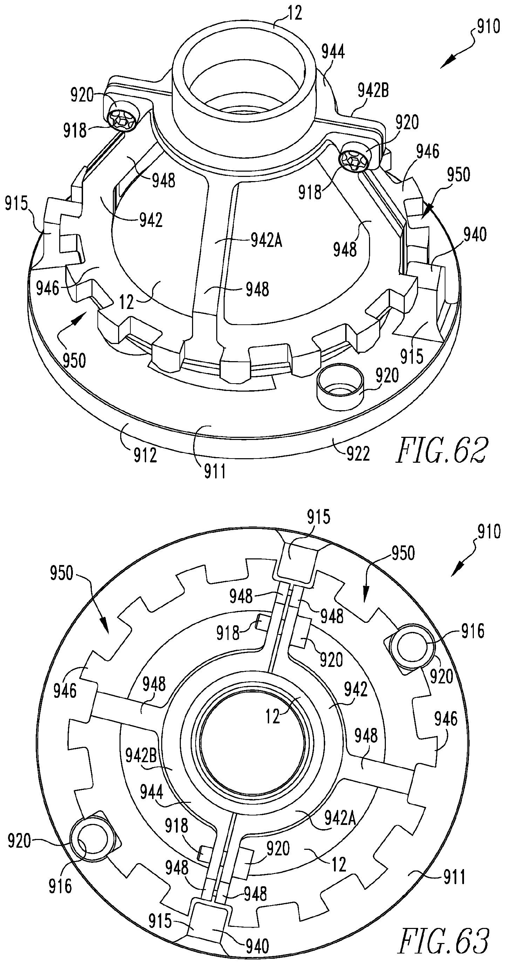

FIGS. 62 and 63 depict a wear mitigation device 910 comprising a base portion 911 having a base 912, formed as a circular ring, that is configured to be coupled to a modified guide tube 100' (such as previously discussed, e.g., see FIG. 32). The wear mitigation device 910 further comprises a plurality of inner protruding members similar to the arrangement of FIGS. 57-61, which the inner conical surfaces of the guide funnel are configured to be seated on. Further, the device 910 comprises a plurality of protruding members 915 which protrude upward from the base portion 911 towards the guide funnel 12. Each of the protruding members 915 includes a flat top surface 940. In the illustrated embodiment, the wear mitigation device 910 includes two protruding members 915, however, it is to be appreciated that the quantity of protruding members 915 may be varied without varying from the scope of the present disclosure.

in order to couple the base 912 to the modified guide tube 100', the base 912 includes a plurality of apertures 916 defined therethrough. Each aperture 916 is positioned so as to align with a corresponding one of the plurality of threaded blind holes 102 of modified guide tube 100'(previously discussed) and to receive a threaded bolt (such as threaded bolt 118 of FIGS. 36A and 36B) therethrough which threadingly engages the corresponding threaded blind hole 102 (e.g., similar to the arrangements shown in FIGS. 36A and 36B). In order to prevent each threaded bolt from loosening, the base 912 further includes a plurality of collars 920, with each collar 920 being disposed about a corresponding one of apertures 916 and extending upward from the base 912. Each collar 920 is deformable inward toward the head portion of each threaded bolt via a crimping tool (not shown) or other suitable mechanism in a manner such that collar 920 may be deformed against the head portion, thus preventing rotation of the threaded bolt engaged by the collar 920. Additionally, the collar 920 prevents loose parts should the head portion separate from the remainder of the threaded bolt. In order to properly align the base 912 with guide tube 100', the base 912 may include a circumferential lip 922 that extends downward therefrom which is sized and configured to cooperatively engage a portion of modified guide tube 100' in a manner that aligns the base 912 with the modified guide tube 100'.

Continuing to refer to FIGS. 62 and 63, the wear mitigation device 910 further includes a cage 942 which is configured to be generally coupled to the guide funnel 12 just above the conical portion thereof and engage the base portion 911 in a manner which inhibits rotation of the guide funnel 12. More particularly, the cage 942 includes an upper collar 944, a lower ring 946, and a plurality of connecting members 948 which span between the upper collar 944 and the lower ring 946 connecting the upper collar 944 and lower ring 946 together. The lower ring 946 includes a plurality of circumferentially spaced notches or recessed portions 950 disposed facing radially outward from the lower ring 946. Each recessed portion 950 is configured to engage a correspondingly positioned protruding member 915 of the base portion 911 in a manner that inhibits rotation of the guide funnel 12 about a central axis of the guide funnel 12, while allowing for axial movement of the guide funnel 12. In the example embodiment of FIGS. 62 and 63, only two recessed portions 950 are engaged by the protruding members 915 of the base portion 911. However, other embodiments are envisioned with more or less than two recessed portions 950 engaged with protruding members 915 (i.e., more or less than two protruding members 915 may be provided).

As illustrated in FIGS. 62 and 63, the cage 942 is formed as two separate portions 942A and 942B, which are coupled together via threaded bolts 918. The cage 942 further comprises crimpable collars 920, which function in the same manner as those previously discussed, extending from portion 942A of the cage 942. The collars 920 surround the head portion of each bolt 918 when the bolts 918 are assembled to the cage 942. It is to be appreciated that by being separable into two portions 942A and 942B, the cage 942 may readily be retrofitted to the guide funnel 12 on an installed thermal sleeve 10. It is also to be appreciated that the cage 942 may be formed as a single unitary member or in more than two portions which may be coupled together without varying from the scope of the present disclosure.

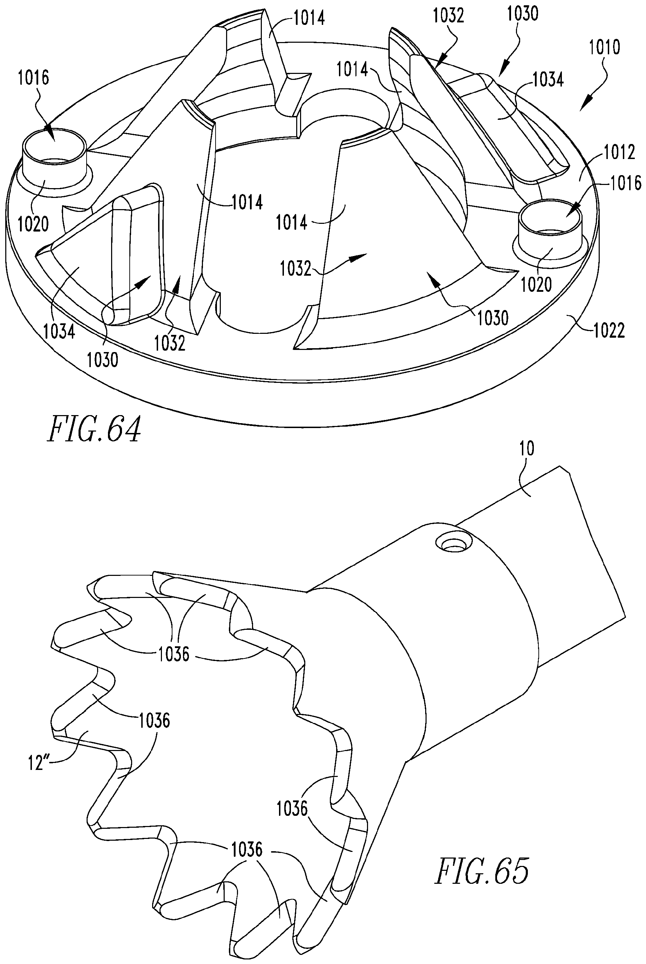

FIG. 64 depicts a wear mitigation device 1010 comprising a base 1012, similar to base 112 previously discussed in regard to FIG. 34, and a plurality of protruding members 1014. Each of the protruding members 1014 extend upward from the base 1012 and are sized and configured to engage a guide funnel 12" of a thermal sleeve 10, such as shown in FIG. 65. In the illustrated embodiment, the wear mitigation device 1010 includes four protruding members 1014, however, it is to be appreciated that the quantity of protruding members 1014 may be varied without varying from the scope of the present disclosure.

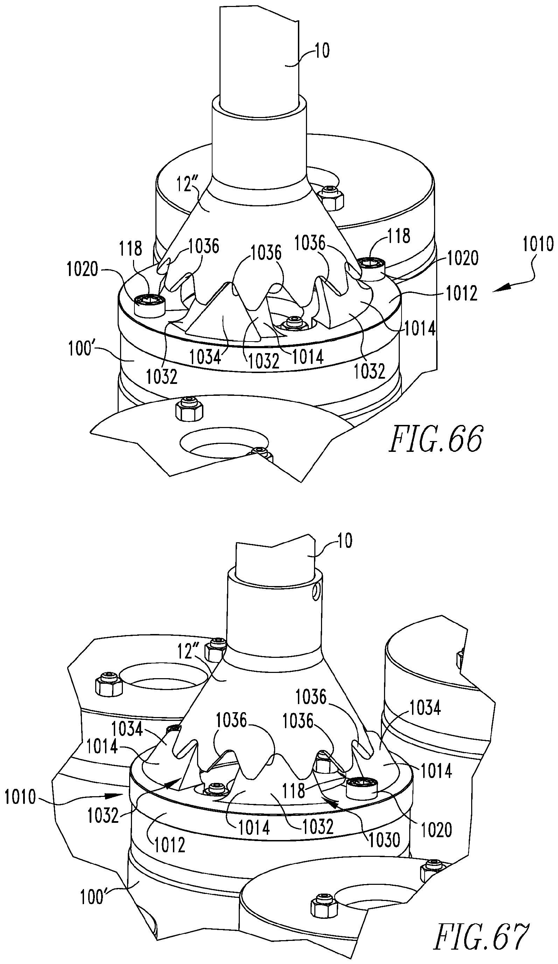

In order to couple the base 1012 to the modified guide tube 100', the base 1012 includes a plurality of apertures 1016 defined therethrough. Each aperture 1016 is positioned so as to align with a corresponding one of the plurality of threaded blind holes 102 of modified guide tube 100' and to receive a threaded bolt 118 therethrough, such as shown in FIGS. 66 and 67, which threadingly engages the corresponding threaded blind hole 102. In order to prevent each threaded bolt 118 from loosening, the base 1012 further includes a plurality of collars 1020, with each collar 1020 being disposed about a corresponding one of the apertures 1016 and extending upward from base 1012. Each collar 1020 is deformable inward toward the head portion of each threaded bolt 118 via a crimping tool (not shown) or other suitable mechanism in a manner such that collar 1020 may be deformed against the head portion, thus preventing rotation of the threaded bolt 118 engaged by the collar 1020. Additionally, the collar 1020 prevents loose parts should the head portion separate from the remainder of the threaded bolt 118. In order to properly align the base 1012 with the guide tube 100', the base 1012 may include a circumferential lip 1022 that protrudes downward from the base 1012 and which is sized and configured to cooperatively engage a portion of the modified guide tube 100' in a manner that aligns the base 1012 with the modified guide tube 100'.

Each extending member 1014 includes a portion 1030 that is configured to engage a corresponding portion of guide funnel 12" of the thermal sleeve 10. Each portion 1030 includes an outward facing surface 1032 that is disposed at an angle that corresponds to the angle of an inner conical surface of guide funnel 12". Two of the portions 1030 further include a generally triangular-shaped key 1034 extending further outward from the outward facing surface 1032. The triangular-shaped key 1034 is sized and configured to cooperatively engage a corresponding triangular-shaped indent or notch 1036 (e.g., formed via EDM machining or other suitable method) defined in guide funnel 12". The engagement between each triangular-shaped key 1034 and corresponding notch 1036 resists, reduces, and/or prevents rotation of the thermal sleeve 10, thus reducing wear otherwise resulting from rotation.

While specific embodiments of the invention have been described in detail, it will be appreciated by those skilled in the art that various modifications and alternatives to those details could be developed in light of the overall teachings of the disclosure and that selected elements of one or more of the example embodiments may be combined with one or more elements from other embodiments without varying from the scope of the disclosed concepts. Accordingly, the particular embodiments disclosed are meant to be illustrative only and not limiting as to the scope of the invention which is to be given the full breadth of the appended claims.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "has," "includes" or "contains" one or more features possesses those one or more features, but is not limited to possessing only those one or more features.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope of the invention.

## Claims

1. A device (2000) for resisting rotation of a thermal sleeve (10) about a central axis (18) thereof relative to a head penetration adapter (6) in a nuclear reactor (2), wherein the device comprises:
a first structure (2010) and a second structure (2020), wherein the first structure (2010) and the second structure (2020) are configured to be operably engaged to resist rotation of the thermal sleeve (10) about the central axis relative to the head penetration adapter (6) while allowing axial movement of the thermal sleeve (10) relative to the head penetration adapter (6),
**characterized in that**
the first structure comprises a first ring (2010) configured to be coupled to the thermal sleeve (10), wherein the first ring comprises a plurality of rod members (2014) extending therefrom, wherein each rod member extends along a rod axis (RA) that is parallel to the central axis of the thermal sleeve (10) when the first structure is coupled to the thermal sleeve (10); and
the second structure comprises a second ring (2020) configured to be coupled to the head penetration adapter (6), wherein the second ring comprises a plurality of thru-holes (2024) formed therein, wherein each thru-hole defines a thru-hole axis (THA) that is parallel to the central axis when the second ring is coupled to the head penetration adapter (6), and wherein each rod member of the first ring (2010) is configured to slidingly engage a corresponding thru-hole of the second ring (2020).

2. The device of claim 1, wherein the first ring is formed of a stainless steel material, and wherein the second ring is formed from an alloy.

3. The device of either claim 1 or 2, wherein the second ring comprises a female threaded portion (2022) which is configured to engage a cooperatively male threaded portion of the head penetration adapter (6).

4. The device of any one of the preceding claims, wherein the second ring comprises an inner stepped portion (2022') configured to receive a lower end of the head penetration adapter.

5. The device of any one of the preceding claims, wherein the second ring comprises a first segment (2022") and a second segment (2024"), and wherein the first segment is couplable to the second segment to attach the second ring to the head penetration adapter.

6. The device of any one of the preceding claims, wherein the plurality of rod members comprises two rod members.

7. The device of any one of the preceding claims, wherein the first ring comprises a first segment (2012") and a second segment (2014"), and wherein the first segment is couplable to the second segment to attach the first ring to the thermal sleeve.

8. The device of claim 5, wherein the first segment (2022") and the second segment (2022") each include interlocking portions (2028"/ 2030"), and wherein the first segment and the second segment are couplable together via the interlocking portions.

9. The device of claim 1, wherein the first ring comprises a first piece (2012") and a second piece (2014") separate from the first piece, wherein the first piece includes one rod member (2013") of the plurality of rod members, and wherein the second piece includes another rod member (2015") of the plurality of rod members.

10. The device of claim 1, wherein each rod member has a non-circular cross-section (3112) and wherein each thru-hole (3218) has a correspondingly-shaped non-circular cross-section.

11. The device of any one of the preceding claims, wherein one of the first structure and the second structure comprises a mechanical clamp (4120) configured to mechanically couple one of the first structure and the second structure to the thermal sleeve or the head penetration adapter.

12. The device of any one of the preceding claims, wherein the first structure comprises a split clamp (5000) configured to be coupled to the thermal sleeve, and wherein the split clamp comprises two segments (5110 / 5210) which are configured to be coupled together via threaded fasteners (5300).

13. The device of claim 12, wherein one of the two segments includes pockets (5218) formed therein for engagement by crimped portions (5312) of one of the threaded fasteners (5300).

14. The device of either claim 12 or 13, wherein one of the two segments comprises a pair of rods (5114) extending therefrom, wherein the second structure comprises axial slots (7') formed in the head penetration adapter, and wherein each rod is configured to engage a respective axial slot in the head penetration adapter.

15. A nuclear reactor vessel comprising:
a head penetration adapter (6),
a thermal sleeve (10), and
a device (2000) for resisting rotation of the thermal sleeve (10) about a central axis (18) thereof relative to the head penetration adapter (6) as claimed in any one of claims 1 to 14.

## Patentansprüche

1. Vorrichtung (2000), die der Drehung einer thermischen Hülse (10) um eine mittlere Achse (18) davon relativ zu einem Deckeldurchführungsadapter (6) in einem Nuklearreaktor (2) entgegenwirkt, wobei die Vorrichtung umfasst:
eine erste Struktur (2010) und eine zweite Struktur (2020), wobei die erste Struktur (2010) und die zweite Struktur (2020) dazu ausgestaltet sind, in einem Wirkeingriff zu sein, um einer Drehung der thermischen Hülse (10) um die mittlere Achse relativ zu dem Deckeldurchführungsadapter (6) entgegenzuwirken, während eine axiale Bewegung der thermischen Hülse (10) relativ zu dem Deckeldurchführungsadapter (6) zugelassen wird,
**dadurch gekennzeichnet, dass**
die erste Struktur einen ersten Ring (2010) umfasst, dazu konfiguriert, mit der thermischen Hülse (10) gekoppelt zu sein, wobei der erste Ring eine Vielzahl sich von dort erstreckender Stabelemente (2014) umfasst, wobei sich jedes Stabelement entlang einer Stabachse (RA) erstreckt, die parallel zur mittleren Achse derthermischen Hülse (10) ist, wenn die erste Struktur mit derthermischen Hülse (10) gekoppelt ist; und
die zweite Struktur einen zweiten Ring (2020) umfasst, dazu ausgestaltet, mit dem Deckeldurchführungsadapter (6) gekoppelt zu sein, wobei der zweite Ring eine Vielzahl darin ausgebildeter Durchgangslöcher (2024) umfasst, wobei jedes Durchgangsloch eine Durchgangslochachse (THA) definiert, die parallel zur mittleren Achse verläuft, wenn der zweite Ring mit dem Deckeldurchführungsadapter (6) gekoppelt ist, und wobei jedes Stabelement des ersten Rings (2010) dazu ausgestaltet ist, verschiebbar in ein entsprechendes Durchgangsloch des zweiten Rings (2020) einzugreifen.

2. Vorrichtung nach Anspruch 1, wobei der erste Ring aus einem Edelstahlmaterial gebildet ist und wobei der zweite Ring aus einer Legierung gebildet ist.

3. Vorrichtung nach Anspruch 1 oder 2, wobei der zweite Ring einen Innengewindeabschnitt (2022) umfasst, der dazu ausgestaltet ist, mit einem entsprechenden Außengewindeabschnitt des Deckeldurchführungsadapters (6) in Eingriff zu gelangen.

4. Vorrichtung nach einem der vorangehenden Ansprüche, wobei der zweite Ring einen inneren abgestuften Abschnitt (2022') umfasst, dazu ausgestaltet, ein unteres Ende des Deckeldurchführungsadapters aufzunehmen.

5. Vorrichtung nach einem der vorangehenden Ansprüche, wobei der zweite Ring ein erstes Segment (2022") und ein zweites Segment (2024") umfasst, und wobei das erste Segment mit dem zweiten Segment koppelbar ist, um den zweiten Ring am Deckeldurchführungsadapter anzubringen.

6. Vorrichtung nach einem der vorangehenden Ansprüche, wobei die Vielzahl von Stabelementen zwei Stabelemente umfasst.

7. Vorrichtung nach einem der vorangehenden Ansprüche, wobei der erste Ring ein erstes Segment (2012") und ein zweites Segment (2014") umfasst, und wobei das erste Segment mit dem zweiten Segment koppelbar ist, um den ersten Ring an der thermischen Hülse anzubringen.

8. Vorrichtung nach Anspruch 5, wobei das erste Segment (2022") und das zweite Segment (2022") jeweils Verriegelungsabschnitte (2028" / 2030") aufweisen, und wobei das erste Segment und das zweite Segment über die Verriegelungsabschnitte miteinander koppelbar sind.

9. Vorrichtung nach Anspruch 1, wobei der erste Ring ein erstes Teil (2012") und ein zweites Teil (2014") separat von dem ersten Teil umfasst, wobei das erste Teil ein Stabelement (2013") von der Vielzahl von Stabelementen umfasst und wobei das zweite Teil ein weiteres Stabelement (2015") von der Vielzahl von Stabelementen umfasst.

10. Vorrichtung nach Anspruch 1, wobei jedes Stabelement einen nicht runden Querschnitt (3112) aufweist und wobei jedes Durchgangsloch (3218) einen entsprechend geformten, nicht runden Querschnitt aufweist.

11. Vorrichtung nach einem der vorangehenden Ansprüche, wobei eine von der ersten Struktur und der zweiten Struktur eine mechanische Klemme (4120) aufweist, die dazu ausgestaltet ist, die erste Struktur oder die zweite Struktur mit der thermischen Hülse oder dem Deckeldurchführungsadapter mechanisch zu koppeln.

12. Vorrichtung nach einem der vorangehenden Ansprüche, wobei die erste Struktur eine geteilte Klemme (5000) umfasst, die dazu ausgestaltet ist, mit der thermischen Hülse gekoppelt zu sein, und wobei die geteilte Klemme zwei Segmente (5110 / 5210) umfasst, die dazu ausgestaltet sind, über Gewindebefestigungsmittel (5300) miteinander gekoppelt zu sein.

13. Vorrichtung nach Anspruch 12, wobei eines der zwei Segmente Taschen (5218) umfasst, die darin für ein Eingreifen durch gecrimpte Abschnitte (5312) eines der Gewindebefestigungsmittel (5300) ausgebildet sind.

14. Vorrichtung nach Anspruch 12 oder 13, wobei eines der zwei Segmente ein Paar von Stäben (5114), die sich von dort erstrecken, umfasst, wobei die zweite Struktur in dem Deckeldurchführungsadapter ausgebildete axiale Schlitze (7') umfasst, und wobei jeder Stab dazu ausgestaltet ist, in einen entsprechenden axialen Schlitz in dem Deckeldurchführungsadapter einzugreifen.

15. Nuklearreaktorbehälter, umfassend:
einen Deckeldurchführungsadapter (6),
eine thermische Hülse (10), und
eine Vorrichtung (2000), die der Drehung der thermischen Hülse (10) um eine mittlere Achse (18) davon relativ zu dem Deckeldurchführungsadapter (6) gemäß einem der Ansprüche 1 bis 14 entgegenwirkt.

## Revendications

1. Dispositif (2000) destiné à empêcher la rotation d'un manchon thermique (10) autour d'un axe central (18) de celui-ci par rapport à un adaptateur de pénétration de tête (6) dans un réacteur nucléaire (2), dans lequel le dispositif comprend :
une première structure (2010) et une seconde structure (2020), dans laquelle la première structure (2010) et la seconde structure (2020) sont configurées afin d'être engagées de manière opérationnelle pour empêcher la rotation du manchon thermique (10) autour de l'axe central par rapport à l'adaptateur de pénétration de tête (6) tout en permettant un mouvement axial du manchon thermique (10) par rapport à l'adaptateur de pénétration de tête (6),
**caractérisé en ce que**
la première structure comprend un premier anneau (2010) configuré afin d'être couplé au manchon thermique (10), dans lequel le premier anneau comprend une pluralité d'éléments de tige (2014) s'étendant à partir de celui-ci, dans lequel chaque élément de tige s'étend le long d'un axe de tige (RA) qui est parallèle à l'axe central du manchon thermique (10) lorsque la première structure est couplée au manchon thermique (10) ; et
la seconde structure comprend un second anneau (2020) configuré afin d'être couplé à l'adaptateur de pénétration de tête (6), dans lequel le second anneau comprend une pluralité de trous traversants (2024) formés dessus, dans lequel chaque trou traversant définit un axe de trou traversant (THA) qui est parallèle à l'axe central lorsque le second anneau est couplé à l'adaptateur de pénétration de tête (6), et dans lequel chaque élément de tige du premier anneau (2010) est configuré pour s'engager de manière coulissante dans un trou traversant correspondant du second anneau (2020).

2. Dispositif selon la revendication 1, dans lequel le premier anneau est constitué d'un matériau en acier inoxydable, et dans lequel le second anneau est constitué d'un alliage.

3. Dispositif selon soit la revendication 1, soit la 2, dans lequel le second anneau comprend une partie filetée femelle (2022) qui est configurée afin de s'engager dans une partie filetée mâle associée de l'adaptateur de pénétration de tête (6).

4. Dispositif selon une quelconque des revendications précédentes, dans lequel le second anneau comprend une partie intérieure étagée (2022') configurée afin de recevoir une extrémité inférieure de l'adaptateur de pénétration de tête.

5. Dispositif selon une quelconque des revendications précédentes, dans lequel le second anneau comprend un premier segment (2022") et un second segment (2024"), et dans lequel le premier segment est couplable au second segment afin d'attacher le second anneau à l'adaptateur de pénétration de tête.

6. Dispositif selon une quelconque des revendications précédentes, dans lequel la pluralité d'éléments de tige comprend deux éléments de tige.

7. Dispositif selon une quelconque des revendications précédentes, dans lequel le premier anneau comprend un premier segment (2012") et un second segment (2014"), et dans lequel le premier segment est couplable au second segment afin d'attacher le premier anneau au manchon thermique.

8. Dispositif selon la revendication 5, dans lequel le premier segment (2022") et le second segment (2022") comportent chacun des parties d'emboîtement (2028"/ 2030"), et dans lequel le premier segment et le second segment sont couplables ensemble via les parties d'emboîtement.

9. Dispositif selon la revendication 1, dans lequel le premier anneau comprend une première pièce (2012") et une seconde pièce (2014") séparée de la première pièce, dans lequel la première pièce comporte un élément de tige (2013") de la pluralité d'éléments de tige, et dans lequel la seconde pièce comporte un autre élément de tige (2015") de la pluralité d'éléments de tige.

10. Dispositif selon la revendication 1, dans lequel chaque tige possède une section transversale non circulaire (3112) et dans lequel chaque trou de passage (3218) possède une section transversale non circulaire de forme correspondante.

11. Dispositif selon une quelconque des revendications précédentes, dans lequel la première structure et la seconde structure comprennent une pince mécanique (4120) configurée afin de coupler mécaniquement l'une de la première structure et de la seconde structure au manchon thermique ou à l'adaptateur de pénétration de tête.

12. Dispositif selon une quelconque des revendications précédentes, dans lequel la première structure comprend un collier divisé (5000) configuré afin d'être couplé au manchon thermique, et dans lequel le collier divisé comprend deux segments (5110/5210) qui sont configurés afin d'être couplés l'un à l'autre par des fixations filetées (5300).

13. Dispositif selon la revendication 12, dans lequel un des deux segments comporte des poches (5218) formées dedans en vue d'un engagement par des parties serties (5312) d'une des fixations filetées (5300).

14. Dispositif selon la revendication 12 ou 13, dans lequel un des deux segments comprend une paire de tiges (5114) s'étendant à partir de celui-ci, dans lequel la seconde structure comprend des fentes axiales (7') formées dans l'adaptateur de pénétration de tête, et dans lequel chaque tige est configurée afin de s'engager dans une fente axiale respective dans l'adaptateur de pénétration de tête.

15. Cuve de réacteur nucléaire comprenant :
un adaptateur de pénétration de tête (6),
un manchon thermique (10) et
un dispositif (2000) destiné à empêcher la rotation du manchon thermique (10) autour d'un axe central (18) de celui-ci par rapport à l'adaptateur de pénétration de tête (6) tel que revendiqué dans une quelconque des revendications 1 à 14.
